(19) Europäisches Patentamt
European Patent Office
Office européen des brevets

(11) **EP 4 685 701 A1**

(12) **EUROPEAN PATENT APPLICATION**

(43) Date of publication:
28.01.2026 Bulletin 2026/05

(21) Application number: 24190699.9

(22) Date of filing: 24.07.2024

(51) International Patent Classification (IPC):
**G06N 3/065** (2023.01)    **G06N 3/082** (2023.01)
**G06N 3/086** (2023.01)    G06N 3/048 (2023.01)

(52) Cooperative Patent Classification (CPC):
**G06N 3/082; G06N 3/065; G06N 3/086;**
G06N 3/048

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Fraunhofer-Gesellschaft zur Förderung
der angewandten Forschung e.V.
80686 München (DE)**

(72) Inventors:
• **RUPING, Sebastian
80686 München (DE)**
• **ZHANG, Lei
80686 München (DE)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR CONFIGURING A NEURAL NETWORK AND ELECTRONIC COMPONENT FOR IMPLEMENTING A NEURAL NETWORK USING ANALOG COMPONENTS**

(57)    A method for configuring a neural network, the neural network implemented using analog components, comprises: for each of a plurality of configurations of a reconfigurable electronic circuit for implementing the neural network, configuring connections between analog components of the reconfigurable electronic circuit according to the respective configuration to adapt an architecture of the neural network, and evaluating an input signal using the neural network implemented by the respective configuration of the reconfigurable electronic circuit to obtain an inference result for the input signal. An electronic component for implementing an analog neural network, e.g. to be configured using the disclosed method, comprises a reconfigurable electronic circuit, which comprises a plurality (24) of resistive elements, a plurality of summing elements, and a plurality of switchable connections, each of the switchable connections being switchable to establish a connection between one of the resistive elements and one of the summing elements.

Fig. 1

**Description**

Embodiments of the present invention relate to a method for configuring a neural network, the neural network being implemented using analog components. In other words, embodiments of the present invention may refer to a method for configuring an electronic circuit implementing an analog neural network. Further embodiments relate to an electronic component for implementing an analog neural network. Further embodiments relate to an apparatus for configuring a neural network implemented using analog components. Embodiments may relate to a method of performing neural architecture search on analog neural network hardware.

Neural networks may be used in various applications, for example, for evaluating sensor signals. In order to reduce the power consumption, as required, e.g., in the field of edge sensors, neural networks may be implemented using analog components for performing operations of the neural network.

However, analog neural network hardware may suffer from suboptimal neural architectures generated by engineer's empirical decision and mapping errors caused by process variation in electronic components, which result into a significant energy overhead and a deteriorated computational precision, respectively. These deficiencies may shorten the battery life of edge sensor systems that utilize embedded analog neural network hardware and may exceed the acceptable extent of prediction/classification accuracy loss. Solving those two problems simultaneously is still impossible using existing methods.

More specifically, the energy consumption of analog neural network hardware has a linear dependence on the number of electronic computational elements utilized, such as inverted summing operational amplifiers as neurons and resistors as synapses. A larger neural network model requires more computational resources, resulting in a higher power consumption, however, it doesn't necessarily lead to a much better prediction or classification accuracy compared to a small model. The computational precision of analog neural network hardware depends on how well it can represent the mathematical computations performed by software. However, the hardware is strongly affected by process variation and parasitic effects, which can shift electronic components from their ideal state and result in an ill-defined mathematical representation of the hardware.

Analog neural network hardware refers to both application-specific integrated circuits (ASIC) and discrete circuits, which have particular circuit architecture to realize computation functions for artificial and spiking neural networks. The accuracy loss represents the difference of the hardware computation result to the software baseline, where hardware obtains worse computation result compared to the software due to the imperfection of the electronics components.

Numerous approaches and methods have been developed to address these problems, both at the software and hardware levels. A first class of software approaches relates to software-based model compression.

Quantization: The history of quantized neural networks can be traced back to the 1990s, where they were initially developed to address the limited computing resolution in optical computers [Fiesler et al., 1990] and the digital hardware implementation of neural networks [Balzer et al., 1991]. Recently, quantized neural networks have gained significant attention due to their strong capability in reducing model size. For instance, reducing the bit precision from 64 floating-point to 2-bit fixed-point directly results in a 32x memory saving and 58x faster operations for digital implementation, as reported in [Rastegari et al., 2016]. Furthermore, the use of quantized neural networks has become crucial for analog neural network hardware, particularly due to the limited number of well-separated memory levels exhibited by emerging non-volatile memories such as memristors and ferro-electric field-effect transistors [Zhang et al., 2020]. By minimizing the weight resolution based on hardware requirements, the neural network demonstrates enhanced robustness against computational errors induced by process variation. Incorporating hardware-aware quantization, which introduces random noise and process variation into the quantized training process, further enhances the robustness of the network against error sources in analog neural network hardware [Klachko et al., 2019] to achieve relatively less accuracy drop. However, the quantization techniques inevitably result in accuracy loss compared to their full-precision baseline due to the lack of weight diversity. This accuracy loss becomes more significant when the quantized neural network is mapped onto hardware. In a general-purpose compute-in-memory system, the use of a mixed-precision neural network, where weights and activation functions are quantized using different data precision, further enhances energy efficiency by utilizing low-resolution data converters. However, this benefit cannot be utilized in purely analog neural network hardware, as data converters can only potentially be used at the input stage to generate an appropriate analog data representation. If the input signals are directly sampled from the sensor, the data converter will not be utilized at all. The significant mapping error is than hard to be estimated.

Pruning: Instead of using quantization techniques to reduce weight resolution, pruning techniques have been proposed to minimize both connections and neurons in order to better fit the neural network model into an embedded system. To achieve this, the pruning algorithm scores the hyper-parameters after the initial training and removes them based on the estimated scores. Similar to quantization, this process also introduces an accuracy loss to the neural network. To mitigate this loss, the reduced model is retrained to recover the accuracy [Han et al., 2015]. There are numerous variants of pruning techniques, but the majority of them are based on this idea. While this method can greatly reduce the size of the neural network, resulting in reduced power consumption when implemented using analog hardware, it may not guarantee computational precision.

Robust coding: To enhance computational precision, a dedicated coding scheme called "Noisy Neural Network Compression" was introduced, considering the variation (or noise) of the phase-change memory. This scheme utilizes redundant devices to preserve the sign, fully utilize the signal range in hardware, and maintain specific redundancy [Isik et al., 2020]. By employing such coding scheme, it becomes possible to achieve a comparable accuracy to the baseline. However, it is important to note that the suboptimal neural architecture cannot be improved. Additionally, while the coding scheme enhances the robustness of the neural network against device variation only, it cannot completely prevent accuracy loss.

Matrix and Tensor Decomposition: Since artificial neural networks heavily rely on multiply-accumulate computations, there is a possibility to reduce the computational effort by reducing the size of vectors (Tensors) and matrices. This can be achieved by utilizing decomposition techniques, such as singular value decomposition [Xue, et al, 2013], which is a mathematical tool capable of obtaining a low-rank approximation of tensors and matrices. This approach specifically reduces the size of the neural network and leads to lower energy consumption in hardware, as it requires fewer computational resources. However, it is important to note that this approach does not enhance robustness against process variation in the hardware, and the mathematical approximation may introduce additional computational precision error.

Other methods, such as knowledge distillation [Bucilua, et al., 2006] and the combination of multiple techniques, have been explored. Additionally, software-based methods are starting to incorporate hardware constraints into the compression procedure to enhance the robustness of neural network hardware. However, these methods often face two challenges: Firstly, the compression can only optimize the model complexity to a certain extent, resulting in limited improvements in energy consumption in hardware. Secondly, hardware constraints are typically defined based on statistical observations, meaning that real hardware may differ from the simulated environment. As a result, while this method can improve the robustness of the neural network, it is not possible to completely eliminate mapping errors.

A second class of software approaches relate to Neural Architecture Search (NAS): Neural architecture search is an automated process that involves searching for an optimal neural architecture by considering the hyperparameters (such as depth, width, connections, types of activation functions, etc.) of the neural networks as tunable parameters in an optimization problem [Bergstra, et al., 2011]. Hence, optimization algorithms like reinforcement learning [Zoph, et al., 2016], Bayesian optimization [Kandasamy, et al., 2018], evolutionary algorithms [Stanley, et al., 2002], are frequently employed in the process. The typical NAS process consists of three steps: first, a large set of architectures is generated; second, the architectures are trained using a backpropagation-based method; finally, the architectures are evaluated, and based on the evaluation results, the algorithm decides whether to select the best architecture or proceed to the next iteration by generating new architectures based on the best architecture from the current iteration. In this case, the architecture will undergo sufficient optimization to meet the target score, and only the important parts will be kept. This makes NAS an attractive approach for deploying neural networks on hardware, as size-optimized neural networks require fewer computational resources. Recently, there has been a rise in popularity of software-hardware co-search approaches (e.g., [Jiang, et al., 2020]), where hardware constraints such as energy consumption are incorporated into NAS using multiple agents. This further enables optimizing the neural architecture for certain hardware architectures and improve robustness by introducing the hardware-aware training. However, software-hardware co-search approaches face challenges due to limited computing resources, as only applications with small/medium size model can be applied.

Weight-Agnostic Neural Network (WANN), [Gaier, et al., 2019], is a type of evolutionary algorithm that simplifies the search process by utilizing shared fixed weights and focusing solely on meaningful connections when searching for the architecture. This algorithm significantly simplifies the search process by eliminating the need for backpropagation-based training. However, similar to other NAS algorithms, the architecture still faces the challenge of mapping error.

The hardware-sided approaches include on-chip learning, which, as the name suggests, involves performing learning tasks partially or entirely on the hardware. In order to calculate gradients at each level, the analog neural network hardware must support bidirectional usage. A common approach is to apply the error signal at the output and propagate it through all intermediate nodes. However, in many cases, the intermediate results need to be converted back to digital representation and undergo post-processing. The newly calculated value will be written to the memory using memory-updating circuits [Krestinskaya, et al., 2019]. Incorporating the real hardware into the training method can significantly reduce the mapping error. Further hardware techniques include offset calibration (e.g., [Zhang, et al., 2023]), which can enhance the computational precision of the hardware by mitigating the impact of process variation and parasitic effects through the addition of offsets. Low-voltage design and more efficient computing methods also contribute to reducing energy consumption. However, these techniques alone cannot fully resolve the fundamental issues such as precision loss and energy overhead at hand.

Accordingly, it would be desirable to provide a concept for configuring a neural network, which is implemented using analog components, the concept allowing for an improved trade-off between a high accuracy of the neural network, a low power consumption, and a low complexity of the neural architecture to be implemented by analog neural network hardware.

This objective is achieved by embodiments according to the independent claims.

Embodiments of the present invention rely on the idea to include the analog neural network hardware into the process of searching a network architecture, i.e., the process of configuring the analog neural network hardware, by evaluating an input signal using a plurality of actual hardware configurations. To this end, a reconfigurable electronic circuit comprising a plurality of analog components is employed for implementing the neural network, and the search process includes configuring the reconfigurable electronic circuit and evaluating an input signal using the neural network implemented by the respective configuration of the electronic circuit for a plurality of different configurations of the electronic circuit. Thus, for each of the configurations, the actual performance of the neural network implemented by the respective configuration may be tested.

An embodiment of the present invention provides a method for configuring (or training or designing) a neural network, e.g., an artificial neural network, (e.g., training or configuring the neural network with respect to a predetermined application), the neural network being implemented by (e.g., using) a plurality of analog components of a reconfigurable (or programmable) electronic circuit (e.g., a reconfigurable or programmable integrated circuit). The method comprises, for each of a plurality of configurations of the reconfigurable electronic circuit for the neural network (e.g., each configuration being represented or characterized by a selection of components out of available components of the reconfigurable electronic circuit and an arrangement of (e.g., a setting of connections between) the components of the selection), configuring connections (e.g., switchable connections) between the analog components of the reconfigurable electronic circuit according to the respective configuration to adapt (or define) an architecture (or a topology or a structure) of the neural network. E.g., the analog components of the reconfigurable electronic circuit comprise a plurality of summing elements and a plurality of resistive elements. The method further comprises, for each of the configurations of the reconfigurable electronic circuit, evaluating an input signal (e.g., an analog input signal) using the neural network implemented by the respective configuration of the reconfigurable electronic circuit to obtain an inference result for the input signal (e.g., the inference result being associated with the respective configuration). E.g., the input signal signals or represents training data.

In other words, for example, the reconfigurable electronic circuit may provide an analog neural network hardware for implementing the neural network. Thus, for example, the neural network may be an analog neural network. For example, an analog neural network may refer to a neural network which is implemented or calculated (at least partially or entirely) through analog computing circuits, e.g., by current and/or charge accumulation. In other words, each configuration of the analog neural network hardware may represent an implementation of a respective architecture of the neural network. The method for configuring the neural network may, for example, be referred to as neural network search, e.g., searching for a configuration fulfilling a predetermined criterion.

By evaluating the input signal using the reconfigurable electronic circuit in the respective configuration, a mapping error may be eliminated entirely. In other words, compared to conventional methods, the neural network search may be performed by evaluating a set of configurations of a reconfigurable electronic circuit. For example, instead of deriving a desired configuration and mapping the desired configuration to the analog neural network hardware by configuring the hardware to reflect the desired configuration as close as possible in view of a resolution of a configurable hardware, embodiments of the present invention rely on the idea to employ various configurations of a reconfigurable electronic circuit for evaluating the input signal so as to take into account the properties of the actual hardware.

For example, in contrast to the above-described methods, such as NAS, where the mapping error cannot be completely eliminated as the statistical model of the hardware may not fully reflect the real hardware implementation, embodiments of the present invention employ the real hardware in the neural network search process, thereby avoiding the mapping error. Even in the hardware-sided approaches described above include a digitalized weight updating loop, which is limited by the resolution of the synapses and data converters, which can result in a small amount of mapping error and hinder architectural optimization.

According to an embodiment, the method further comprises evaluating the plurality of configurations (e.g., with respect to a predetermined measure or criterion) based on the respective inference results to select one of the configurations (e.g., as a final configuration, e.g. a configuration representing a search result or training result, or as a configuration to serve as a starting point for deriving further configurations to be evaluated).

In other words, for example, the method for configuring the neural network may be based on evaluating a plurality of configurations. In contrast, conventional methods may apply back-propagation of an error signal, which requires bi-directionality and which further implies that a weight is to be set to a specific value as a result of the back-propagation. In contrast, evaluating various configurations of the reconfigurable neural network may imply adapting the architecture of the neural network. Testing various architectures is less complex and takes into account the real hardware, thereby avoiding a mapping error.

For example, compared to conventional methods such as the above-described hardware-sided approaches, examples of the present invention do not require a back-propagation-based training, in which an error signal is back-propagated through the neural network to determine error contributions of individual nodes. In other words, embodiments of the present invention may perform the training of the neural network without back-propagation.

According to an embodiment, the method further comprises, for each of the plurality of configurations, providing a configuration signal to the reconfigurable electronic circuit to configure the reconfigurable electronic circuit according to the respective configuration.

According to an embodiment, configuring the connections between the analog components of the reconfigurable electronic circuit comprises setting (e.g., activating and/or deactivating) switchable connections (e.g., pair-wise connections) between a plurality of neuron components (e.g., summing elements, e.g., summing amplifiers) and a plurality of synapse components (e.g., resistive elements, e.g., resistors) of the reconfigurable electronic circuit, thereby selecting a set out of the plurality of neuron components as neurons for the neural network and a set out of the plurality of synapse components as synapses (e.g., weighted connections, e.g., connections between neurons, of the neural network) for the neural network. For example, configuring the connections between the analog components of the reconfigurable electronic circuit comprises setting pair-wise switchable connections between one of the plurality of neuron components and one of the plurality of synapse components.

Thus, for example, by configuring the connections between the neuron components and the synapse components, an architecture of the neural network is defined for the respective configuration of the reconfigurable electronic circuit.

In other words, for example, the reconfigurable electronic circuit may comprise neuron components being selectable as neurons of the neural network and synapse components being selectable as synapses of the neural network. For example, synapses act as weighted connection between neurons of the neural network. In other words, a synapse may have a weight associated therewith, which, e.g., is defined by a resistance of the respective synapse component.

According to an embodiment, the method further comprises determining a set of configurations for the neural network, and, for each of the set of configurations: configuring connections between the analog components of the reconfigurable electronic circuit according to the respective configuration to adapt (or define) an architecture of the neural network; processing an input signal (e.g., signaling or representing training data) using the neural network implemented by the respective configuration of the reconfigurable electronic circuit to obtain an inference result for the input signal (e.g., associated with the respective configuration); and evaluating the set of configurations (e.g., with respect to a predetermined measure or criterion) based on the respective inference results. According to this embodiment, the method comprises, if none of the configurations of the set of configurations fulfills a predetermined criterion, determining a further set of configurations for the neural network based on the selected configuration (and, e.g., process the further set of configurations as the set of configurations, in other words, re-determine the set of configurations). For example, if the selected configuration fulfills the predetermined criterion, the method may comprise selecting the selected configuration as a final configuration.

In other words, embodiments of the present invention may rely on testing various architectures of the neural network, e.g., instead of performing an error analysis such as by means of back-propagation.

According to an embodiment, determining the further set of configurations comprises determining a modification with respect to the selected configuration in terms of one or more of adding a neuron, deleting a neuron component, exchanging a neuron component, adding a synapse component, deleting a synapse component, exchanging a synapse component of the neural network. For example, the modification is selected randomly within the limits of one or more predetermined constraints. E.g., one or both of the type (e.g., adding, removing, exchanging) of modification and the involved component is selected randomly within the limits of one or more predetermined constraints.

For example, a plurality of neuron components of the reconfigurable electronic circuit may be nominally equal and/or a plurality of synapse components of the reconfigurable electronic circuit may be nominally equal. Thus, for example, a selection of one of the components may be performed irrespective of a nominal property (e.g., resistance or offset) of the respective component.

In other words, embodiments may make use of a concept of analog neural network hardware, which exploits the process variation of nominally equal components. While in conventional methods, the diversity of the weights and the bias is obtained by training, the herein disclosed method may exploit the diversity of the weights, the bias and even the activation function as obtained by the process variation to build an efficient architecture. In this case, the process variation is no more issue, which causes mapping error, but a benefit to have a certain search space.

In other words, embodiments of the herein described method for performing neural architecture search on such analog neural network hardware may use an evolutionary algorithm to find an optimal architecture, while the process variation provides sufficient diversity. Therefore, no backpropagation-based training is required. For example, the evolutionary algorithm may be implemented with the hardware-specific mutation and crossover operations described in detail below. In contrast to conventional methods, the network architecture search, e.g., the training of the neural network, is applied directly on the analog neural network hardware, e.g. the reconfigurable electronic circuit.

According to an embodiment, the method comprises storing a final configuration for the neural network in a storage component, e.g., a volatile or non-volatile memory. For example, the storage component is part of an integrated circuit comprising the reconfigurable electronic circuit. Having the final configuration stored in the storage component fixes the configuration for the analog neural network being used in the desired application.

A further embodiment of the present invention provides an electronic component (e.g., an ASIC) for implementing an analog neural network, the electronic component comprising a reconfigurable electronic circuit. The reconfigurable electronic circuit comprises a plurality of resistive elements (e.g., resistors) (e.g., for acting as weights of connections, e.g., synapsis, of the analog neural network). The reconfigurable electronic circuit further comprises a plurality of (e.g., analog) summing elements (e.g., each of the summing elements is configured for providing an output signal being a function of the sum of a plurality of input signals of the summing element) (e.g., summing amplifiers, e.g., inverted-summing amplifiers, e.g., operational amplifier) (e.g., for acting as neurons of the analog neural network). The reconfigurable electronic circuit further comprises a plurality of switchable connections, each of the switchable connections being switchable to establish (e.g., switchable to connect or disconnect, e.g., switchable to activate or deactivate) a connection (e.g., a pair-wise connection) between one (e.g. exactly one) of the resistive elements and one (e.g., exactly one) of the summing elements, (wherein a configuration (e.g. a setting) of the switchable connections (e.g. deciding for each of the switchable connections if the connection is switched on or off) defines an architecture (or topology or structure) of the analog neural network, in which the summing elements serve as neurons and the resistive elements serve as weights of synapsis between neurons or between an input connector of the analog neural network and a neuron).

The reconfigurable electronic circuit comprising the switchable connections between the resistive elements and the summing elements allows for configuring the electronic component in a plurality of different configurations representing different architectures for the analog neural network. Thus, the electronic components allows different configurations to be evaluated on the hardware for implementing the neural network, one of which may be selected as a final configuration for operating the neural network. As this configuration corresponds to one of the tested ones, the electronic component may provide for implementing a neural network in analog components without a mapping error compared to the training process.

According to an embodiment, the electronic component comprises a crossbar switch (e.g., referred to as first crossbar switch) for providing switchable connections (e.g., pair-wise connections) between each one of respective outputs of the plurality of resistive elements and each one of respective inputs of the summing elements. Additionally or alternatively, the electronic component comprises a crossbar switch (e.g., referred to as second crossbar switch) for providing switchable connections (e.g., pair-wise connections) between each one of respective outputs of the plurality of summing elements and each one of respective inputs of the resistive elements (wherein the second crossbar further provides switchable connections between each one of one or more input connectors of the reconfigurable electronic circuit and each one of the respective inputs of the resistive elements). Crossbar switches may provide switchable connections between pairs of each one of a first set of components and a second set of components, so that the crossbar switches may allow for connecting any one of the outputs of the resistive elements to any one of the inputs of the summing elements and/or connecting any one of the outputs of the summing elements to any one of the outputs of the summing elements, thereby allowing a high flexibility in defining the architecture of the neural network.

According to an embodiment, the electronic component comprises one or more storage components for storing a configuration of the switchable connections.

According to an embodiment, the plurality of resistive elements are nominally equal (e.g., wherein all of the plurality of resistive elements have an identical nominal resistance value). Additionally or alternatively, the plurality of summing elements are nominally equal (e.g., wherein all of the plurality of summing elements have an identical nominal value of their feedback resistors and an identical nominal offset voltage (which, e.g., acts as bias for the neural network)).

For example, embodiments rely on the idea to exploit the statistical process variance of the manufacturing process of the components of the reconfigurable electronic circuit to provide for different weights and/or activations and/or bias for the neural network by selecting components out of the pool of available components of the reconfigurable electronic circuit. In other words, instead of making the architecture robust against process variation as in conventional methods, according to embodiments of the present invention, the process variation is used for providing the diversity and thus, no training (e.g. in the sense of adapting weights) may be required. Instead, the neural network may be purely defined by selecting the components and their interconnection.

According to an embodiment, a variance of a resistance value of the plurality of resistive elements is in a range between 5 % and 50 %, or between 5 % and 30 %. Additionally or alternatively, the summing elements are implemented as operational amplifiers. A variance of an offset voltage of the operational amplifier may be in a range between 5mV and 100mV, and/or a variance of a resistance value of feedback resistors of the operational amplifiers is in a range between 5 % and 50 %, or between 5 % and 30 %. Variances in these ranges provide sufficient diversity in the set of available values for the weights, activation, and/or bias.

According to an embodiment, the electronic component is implemented as integrated circuit and the electronic component further comprises an input interface (e.g., a digital interface). According to this embodiment, the electronic component is configured for receiving a configuration signal via the input interface and configuring the switchable connections according to the configuration signal. Thus, the neural network search or configuration of the neural network may be performed by a separate device, thereby allowing for a low complexity of the electronic component.

According to an embodiment, the above described method comprises configuring the reconfigurable electronic circuit according to any of the embodiments of the electronic components described above.

A further embodiment of the present invention provides an apparatus for configuring a neural network (e.g., designing the analog neural network with respect to a predetermined application) (e.g., application specific analog (e.g., an analog artificial neural network). The apparatus comprises the electronic component according to any of the embodiments described above and a processing unit (e.g., a CPU unit) configured for performing the method according to any of the embodiments described above.

According to an embodiment, the apparatus is implemented as an integrated electronic circuit. Thus, the processing unit and the reconfigurable electronic circuit may be integrated in in one integrated circuit.

Embodiments of the present disclosure are described in more detail below with respect to the figures, among which:

Fig. 1        illustrates a method for configuring a neural network according to an embodiment,

Fig. 2        illustrates an electronic component according to an embodiment,

Fig. 3        illustrates a further embodiment of a method for configuring a neural network,

Fig. 4        illustrates the interfaces of a method for configuring a neural network according to an embodiment,

Fig. 5A        illustrates a further embodiment of a method for configuring a neural network,

Fig. 5B        illustrates a conventional method for configuring a neural network,

Fig. 6        illustrates mutations for deriving a configuration of a neural network according to an embodiment,

Fig. 7A, B        illustrate crossover operations for deriving a configuration of a neural network according to embodiments,

Fig. 8        illustrates an example of a neuron component implemented as inverted-summing amplifier according to an embodiment,

Fig. 9        illustrates a further embodiment of an electronic component,

Fig. 10        illustrates an integrated implementation of an electronic component according to an embodiment,

Fig. 11        illustrates an implementation of an apparatus for configuring a neural network with external controller according to an embodiment,

Fig. 12        illustrates a implementation of an apparatus for configuring a neural network with external controller and integrated sensor according to an embodiment,

Fig. 13        illustrates a implementation of an apparatus for configuring a neural network with integrated controller and integrated sensor according to an embodiment,

Fig. 14        illustrates interfaces for providing input data according to embodiments,

Fig. 15        illustrates an example of a method for simulating the method for configuring a neural network,

Fig. 16        illustrates examples of network architectures of a simulation,

Fig. 17        illustrates a comparison between conventional methods and embodiments.

Embodiments of the present invention are now described in more detail with reference to the accompanying drawings, in which the same or similar elements or elements that have the same or similar functionality have the same reference signs assigned or are identified with the same name. In the following description, a plurality of details is set forth to provide a thorough explanation of embodiments of the disclosure. However, it will be apparent to one skilled in the art that other embodiments may be implemented without these specific details. In addition, features of the different embodiments described herein may be combined with each other, unless specifically noted otherwise.

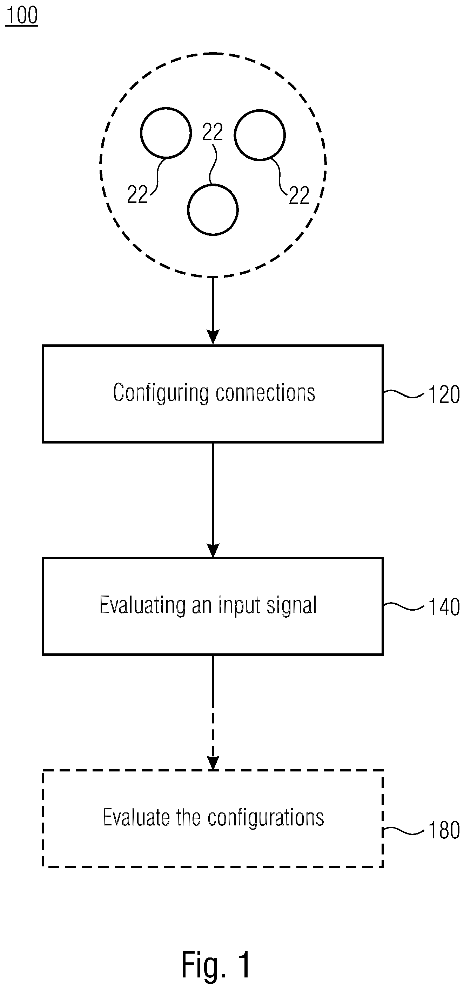

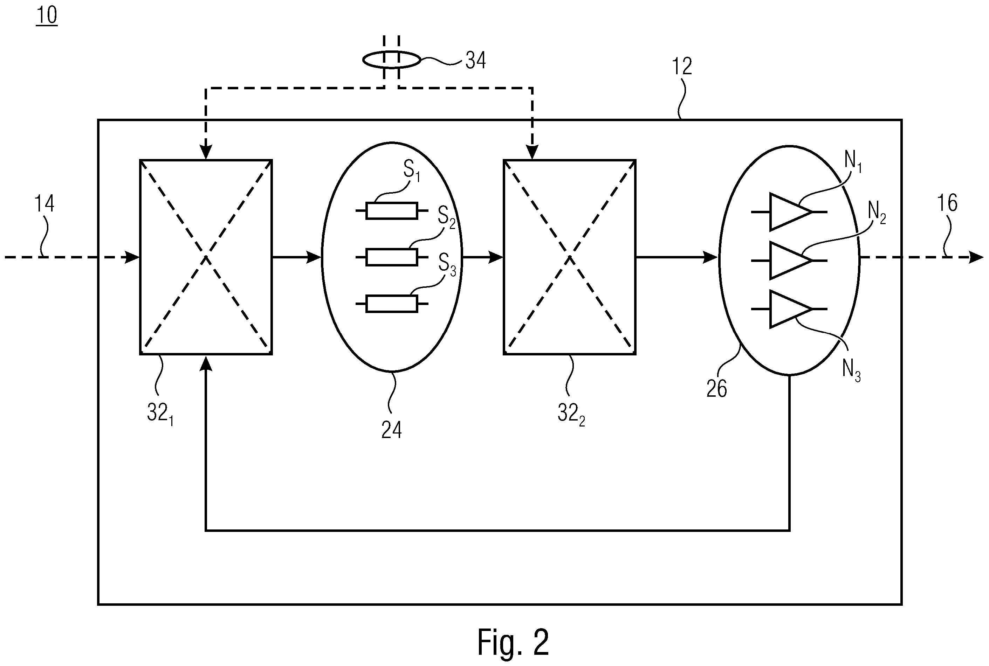

Fig. 1 shows a block diagram of a method 100 for configuring a neural network according to an embodiment. According to the method 100, the neural network is implemented by a plurality of analog components of a reconfigurable electronic circuit, e.g., as it will be described below with respect to Fig. 2. Method 100 according to Fig. 1 comprises performing a step 120 and a step 140 for each of a plurality of configurations 22 of the reconfigurable electronic circuit, e.g. the reconfigurable electronic circuit 12 which will be described with respect to Fig. 2, and which may be referred to as analog neural network hardware. Step 120 comprises configuring connections between the analog components of the reconfigurable electronic circuit according to the respective configuration to adapt an architecture of the neural network. Step 140 comprises evaluating an input signal (e.g., one or more input signals or an input signal comprising one or more components) using the neural network implemented by the respective configuration of the reconfigurable electronic circuit to obtain an inference result for the input signal.

Thus, for example, method 100 may incorporate the analog neural network hardware 12 into the neural architecture search process, e.g., through genetic coding, thereby eliminating the need for backpropagation-based training. For example, exact values of the individual components are unknown, e.g. in embodiments using a plurality of nominally equal neuron elements and/or synapse elements, and therefore, in examples, fine tuning of individual elements, and backpropagation-based training, may be unfeasible. Instead, according to embodiments, an architecture may be evaluated on the real hardware as a whole.

Fig. 2 illustrates an electronic component 10 for implementing an analog neural network according to an embodiment. In other words, the electronic component 10 may be configured for implementing a neural network using analog components. The electronic component 10 comprises a reconfigurable electronic circuit 12. The electronic circuit comprises a plurality 24 of resistive elements and a plurality 26 of summing elements. In Fig. 2, the plurality 24 of resistive element comprises resistive elements $S_1$, $S_2$, $S_3$ for illustrative purpose, and the plurality 26 of summing elements comprises summing elements $N_1$, $N_2$, $N_3$ for illustrative purpose. For example, the resistive elements may serve as synapse elements of the neural network implemented by the reconfigurable electronic circuit and the summing elements may serve as neuron elements of the neural network, and may be referred to as such in the following. The reconfigurable electronic circuit 12 further comprises a plurality of switchable connections. In Fig. 2, two blocks $32_1$, $32_2$ of switchable connections are shown, each of the block representing a plurality of switchable connections between each one of the plurality of resistive elements and each one of the summing elements. For example, block $32_1$ of switchable connections may represent a plurality of switchable connections, each of which may connect the output of one of the summing elements with the input of one of the resistive elements. Similarly, block $32_2$ of switchable connections may represent a plurality of switchable connections, each of which may connect the output of one of the resistive elements with the input of one of the summing elements. For example, the plurality of switchable connections may comprise switchable connections between the respective outputs of each of the synapse elements and the respective inputs of each of the neuron elements, and between the respective outputs of each of the neuron elements and the respective inputs of each of the synapse elements. For example, the reconfigurable electronic circuit 12 may be referred to as analog neural network hardware.

For example, the summing elements are implemented as operational amplifiers, e.g., inverted-summing operational amplifiers. In this case, the resistance of the feedback resistor of the operational amplifier may define the slope of the activation function of the respective neuron, and the offset voltage of the operational amplifier may define a bias of the respective neuron embodied by the operational amplifier.

It is noted that the input of a neuron component may be connected to one or more synapse components. Thus, for example, by setting the switchable connections, a selection of one or more or all of the neuron elements may be interconnected via the synapse components in sequence or in parallel, thereby defining the architecture of a neural network, wherein the synapse components, by way of the resistance of the resistive elements, may act as weighted connections between the neuron elements.

In other words, for example, the analog neural network comprises a plurality of the summing elements serving as neurons interconnected such that a neuron of the analog neural network receives as an input respective outputs of one or more further ones of the plurality of neurons, the respective outputs being weighted by respective weights before being provided as input for the neuron. For example, an input of one of the summing elements is provided with one or more connections to respective outputs of one or more further ones of the summing elements or to one or more input connectors of the reconfigurable electronic circuit, the one or more connections comprising respective ones of the resistive elements.

According to an embodiment, the reconfigurable electronic circuit may comprise further switchable connections, each of which being switchable to establish a connection between one of one or more input interfaces and one of the resistive elements. The input interfaces may be for receiving respective components of an input signal 14, which is exemplarily illustrated in Fig. 2. Similarly, the reconfigurable electronic circuit may comprise further switchable connections (not shown in Fig. 2), each of which is switchable to establish a connection between one of the outputs of the neuron elements and one of one or more output terminals, the output terminals being configured for providing an output signal 16. Thus, the output signal may comprise one or more components, provided on respective output terminals, which may comprise respective components.

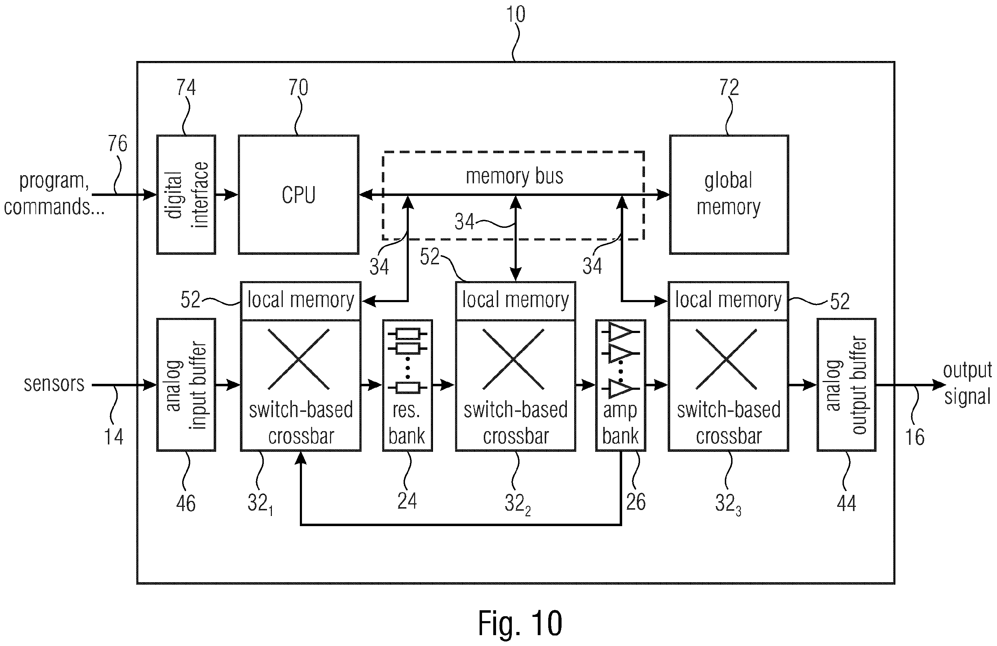

According to an embodiment, the switchable connections may be implemented in the form of one or more crossbar switches, e.g. as described with respect to Fig. 10. For example, block $32_1$ of Fig. 2 may represent a first crossbar switch and block $32_2$ a second crossbar switch. Optionally, the reconfigurable electronic circuit 12 may comprise a third crossbar switch receiving as inputs the outputs of the neuron components 26 and being connected on the output side to one or more output terminals acting as output neurons. For example, each of the crossbar switches may comprise a switchable connection between each pair of one of the inputs and one of the outputs of the respective crossbar switch.

In other words, the switchable connections may allow interconnecting the neuron elements via the synapse elements to form a neural network, through which an input signal provided at input interfaces serving as input neurons may be propagated to obtain an output signal at output neurons of the neural network.

For example, the neural network defined by the configuration of the reconfigurable electronic circuit may be forward connected.

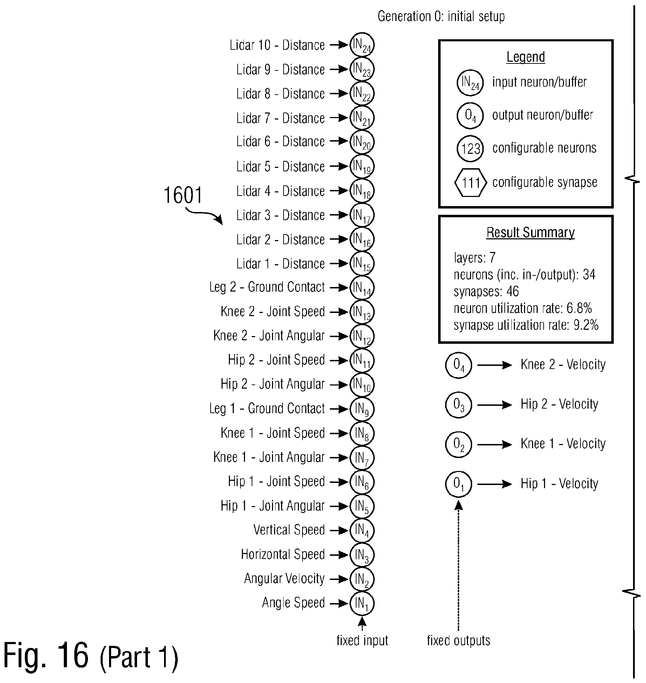

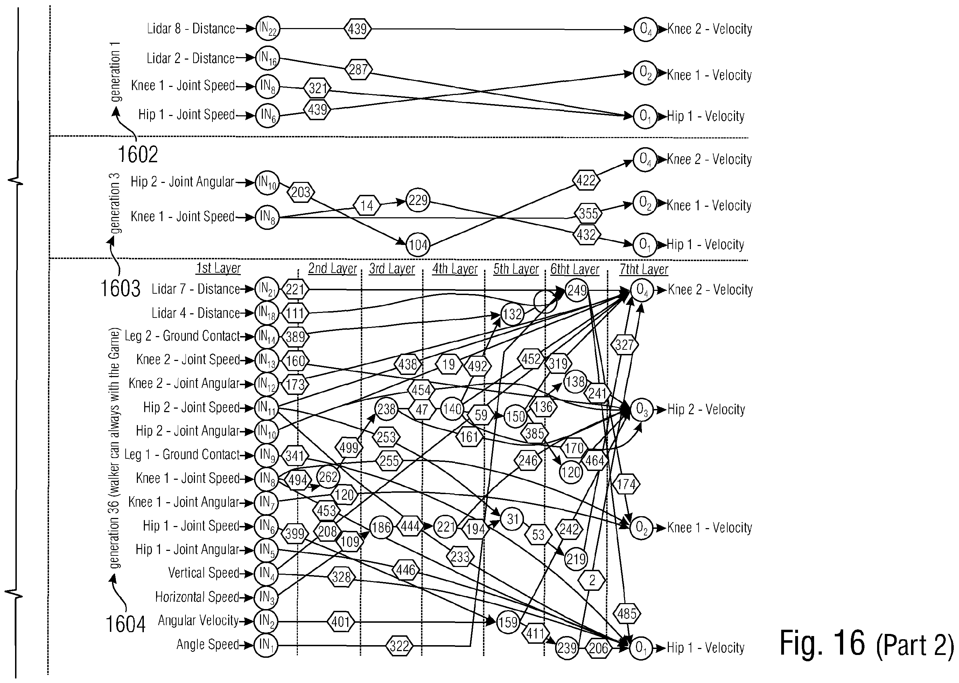

For example, the neuron elements may be assigned to layers, each neuron receiving the signal provided by one or more neuron elements of one or more previous layers, wherein, optionally, one or more layers may be skipped. In other words, for example, the neural network defined by the configuration of the reconfigurable electronic circuit may comprise direct connections and skip connections, e.g. as it is visible in Fig. 16.

According to an embodiment, the neural network may comprise recurrent connections.

As an alternative to amplifier-based neurons, according to an embodiment, the neuron elements may be implemented as integrate-and-fire neurons. Thus, the neural network may be implemented as spiking neural network.

According to an embodiment, the plurality 24 of resistive elements are nominally equal. In other words, the resistive elements of the plurality 24 of resistive elements may all have the same nominal resistance value, but the resistance values of the resistive elements may differ according to a process variance inherent to a production process of producing the electronic circuit 12.

According to an embodiment, the plurality 26 of summing elements are nominally equal. In other words, the summing elements of the plurality 26 of resistive elements may all have the same nominal resistance value of their feedback resistor and/or of their offset voltage, but the resistance values and/or offset voltages may differ according to a process variance inherent to a production process of producing the electronic circuit 12.

In other words, the capability of changing a weight, an activation, or an bias of the neural network may be achieved by exchanging one synapse element by another or a neuron element by another, respectively, wherein the real values associated with the respective individual elements may be unknown, so that such amendments may be performed randomly. Thus, embodiments of the present invention rely on the idea to exploit the variation in the production process for adapting the neural network architecture and thus for configuring (or searching an architecture of) the neural network.

In other words, according to an embodiment of the proposed analog neural network hardware system, all components of one type (e.g., neurons, synapses) may be same from design's point of view but their real values are actually different.

For example, a variance of a resistance value of the plurality of resistive elements is in a range between 5 % and 50 %, or between 5 % and 30 %.

For example, the summing elements are implemented as operational amplifiers. For example, a variance of an offset voltage of the operational amplifier is in a range between 5mV and 100mV, and/or a variance of a resistance value of feedback resistors of the operational amplifiers is in a range between 5 % and 50 %, or between 5 % and 30 %.

According to embodiments, one or more sets of resistive elements and/or summing elements, each set having nominally equivalent elements, are possible.

According to an embodiment, all resistive elements of the reconfigurable electronic circuit are nominally equal.

According to a further embodiment, the reconfigurable electronic circuit may comprise a further plurality of resistive elements, which are nominally equal, the resistive elements of the further plurality having a nominal resistance value which is different from the nominal resistance value of the plurality 24 of resistive elements. The further plurality of resistive elements may be individually connectable by switchable connections to the plurality of summing elements, e.g., as it is described with respect to the plurality 24 of resistive elements.

According to an embodiment, all summing elements of the reconfigurable electronic circuit are nominally equal.

According to a further embodiment, the reconfigurable electronic circuit may comprise a further plurality of summing elements which are nominally equal, the summing elements of the further plurality having a nominal resistance value of their feedback resistor and/or of their offset voltage which is different from the nominal resistance value and/or offset voltage of the plurality 26 of summing elements. The further plurality of summing elements may be individually connectable by switchable connections to the plurality of resistive elements, e.g., as it is described with respect to the plurality 24 of resistive elements.

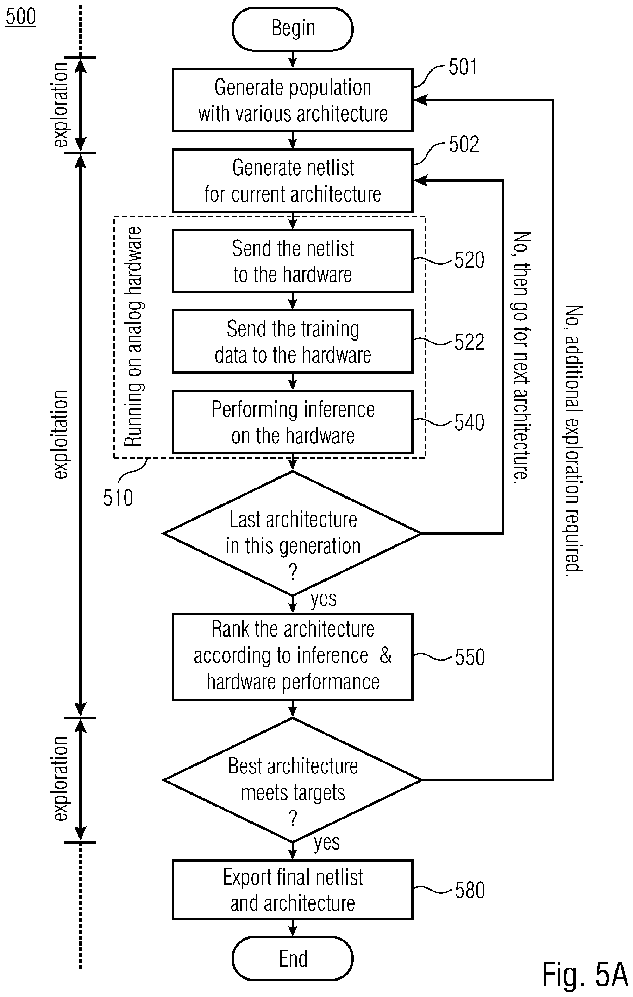

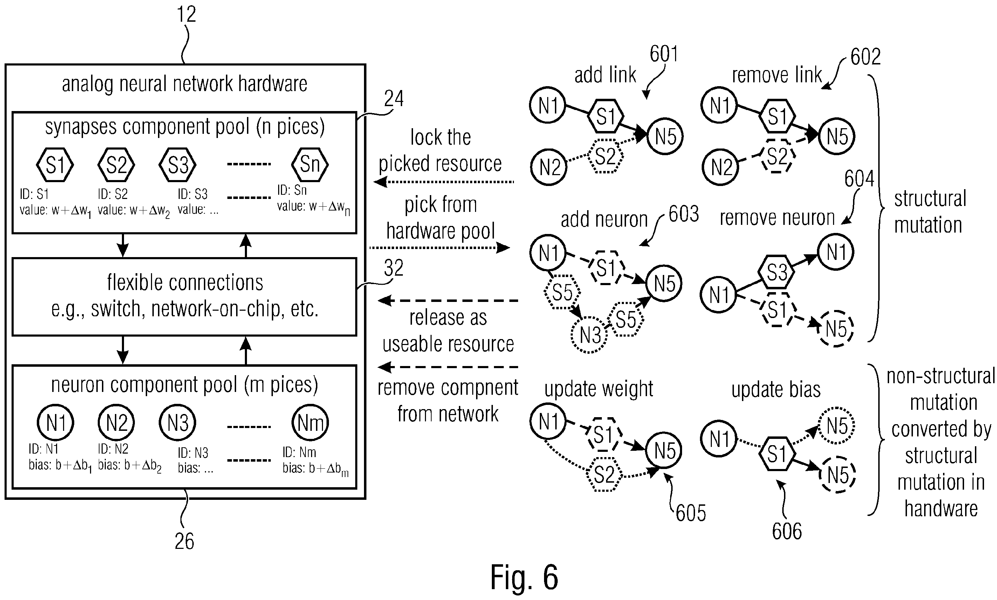

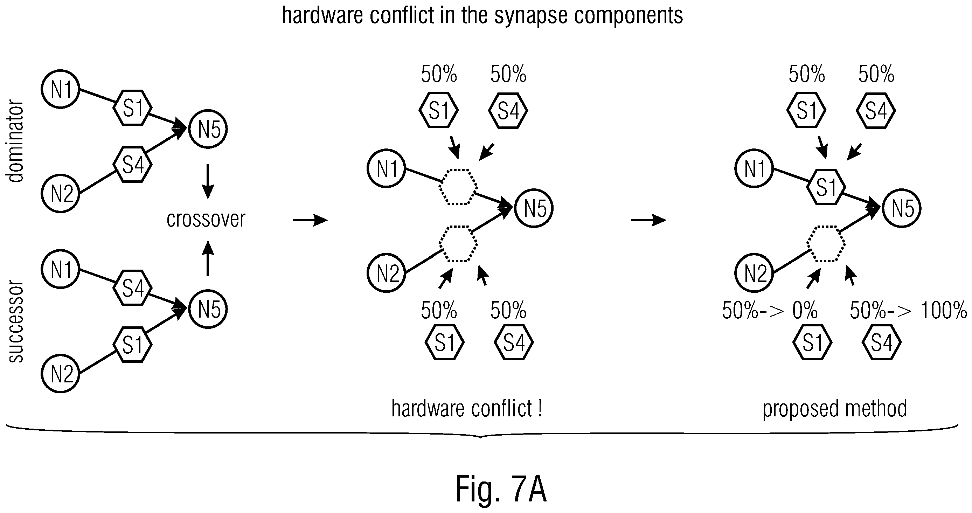

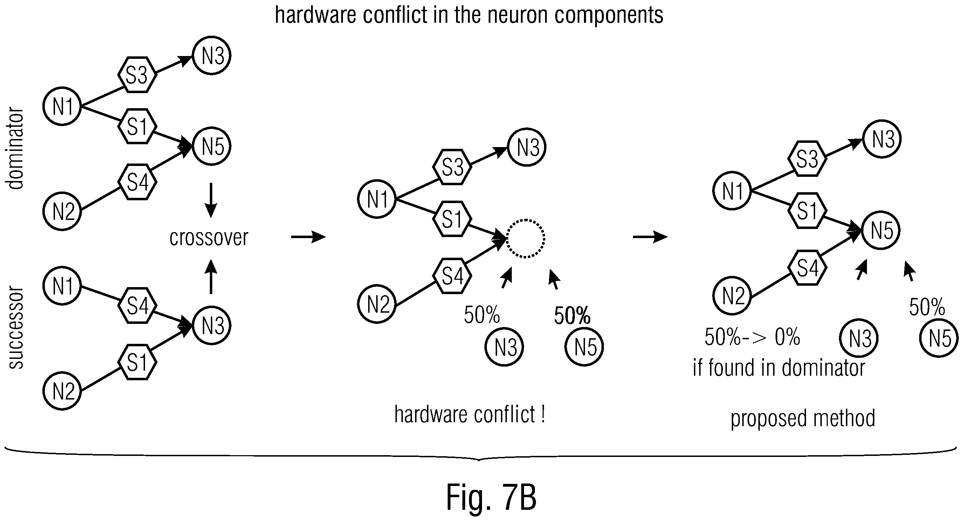

For example, compared to existing mixed-signal and digital evolvable implementations, which rely on the backpropagation-based training, embodiments described herein may rely on the idea of using the process variation for providing the diversity instead of making the architecture robust against process variation. As a consequence, no additional training of weights may be required, once the architecture is found. For example, as will be described with respect to Fig. 5A, the hardware and netlist may be included in the loop of the evolutionary algorithms. For example, the target may be finding out the best combination of the hardware to achieve a certain target. For example, for deriving the architectures to be evaluated, dedicated hardware operations may be used, e.g., mutation and crossover, e.g., as described below with respect to Fig. 6 and 7.

According to an embodiment, the electronic component comprises one or more storage components for storing a configuration of the switchable connections.

According to an embodiment, the one or more storage components may be non-volatile storage components. Thus, they may store the configuration after the electronic component is disconnected from power.

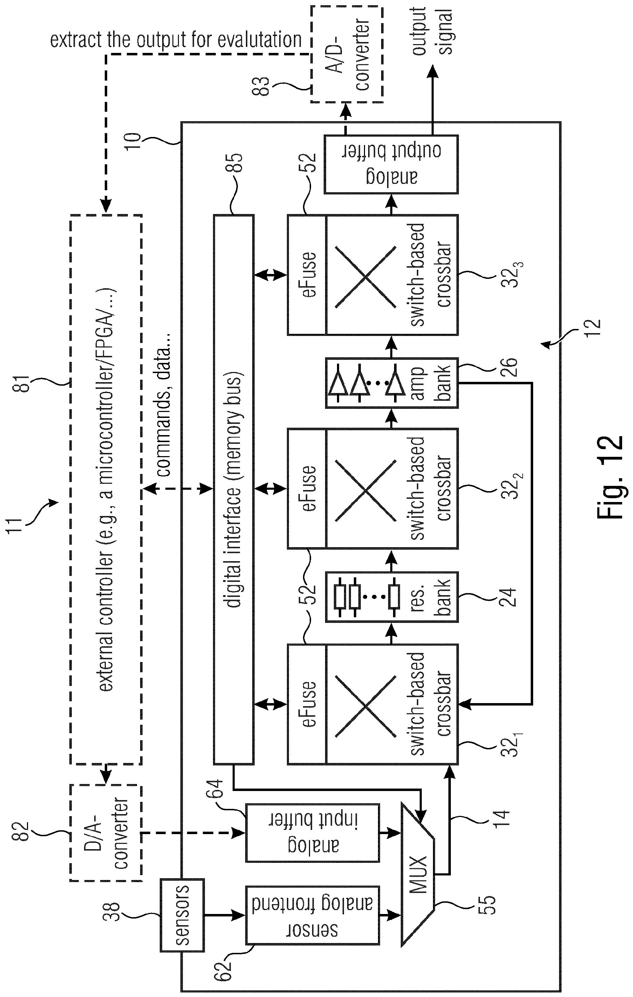

According to another embodiment, the one or more storage components may be implemented as one-time programmable memory, e.g., eFuses, e.g., as described with respect to Fig. 12 below.

It is noted that the electronic component 10 may comprise multiple analog neural network hardware units, e.g., multiple of the reconfigurable electronic circuits 12. In this case, the method 100 may comprise determining configurations for the respective reconfigurable electronic circuits 12 so that each of them satisfies the global optimum.

The following description continues with the description of the method 100 of Fig. 1, wherein the reconfigurable electronic circuit referred to in the context of the method 100 may optionally implemented as described with respect to the electronic circuit 12 of Fig. 2, wherein, for example, the analog components may comprise neuron element, e.g., summing elements, and synapse elements, e.g., resistive elements.

For example, configuring the connections between the analog components according to step 120 of method 100 may comprise setting, e.g. enabling or disabling, the switchable connections between the neuron components and the synapse components of the reconfigurable electronic circuit 12.

For example, step 120 of configuring the connection may comprise providing a configuration signal 34, as exemplary illustrated in Fig. 2, to the reconfigurable electronic circuit 12 to configure the reconfigurable electronic circuit 12 according to the respective configuration.

As illustrated in Fig. 1, method 100 may optionally comprise a step 180 of evaluating the plurality of configurations based on the respective inference results to select one of the configurations. For evaluating the configurations, a metric or measure or criterion may be applied to the respective inference results. For example, the metrics on which the evaluation of the configurations is based may include one or more of an accuracy of the inference, e.g., in terms a size or a norm of an error or error signal, an energy consumption of the inference process, and a time consumption of the inference process.

For example, method 100 may comprise iteratively evaluating configuration of the reconfigurable electronic circuit until a configuration meets a predetermined criterion. The predetermined criterion may be based on the above-mentioned metrics for evaluating the configurations.

For example, the configurations may be evaluated set-wise. That is, for example, method 100 may comprise evaluating one or more sets of configurations. For example, method 100 may start with evaluating a first set of configurations. If any of the configurations of the first set fulfills a predetermined criterion, the respective set may be selected as a final configuration, and if no configuration meets the predetermined criterion, method 100 may continue with deriving a further set of configurations to be evaluated. In other words, method 100 may comprise iteratively evaluating sets of configurations until a configuration meets the predetermined criterion. A detailed embodiment including a set-wise evaluation of configurations will be described below with respect to Fig. 5A.

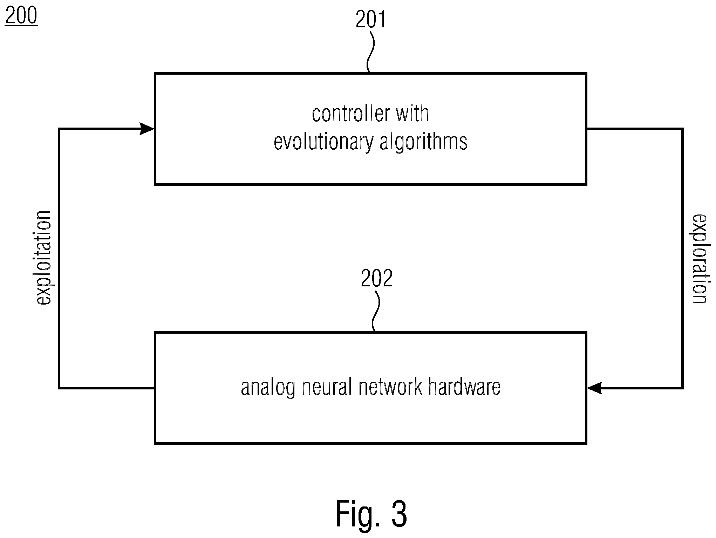

Fig. 3 illustrates a block diagram of a method 200 according to an embodiment. In examples, method 200 may be an implementation of method 100 of Fig. 1. As illustrated in Fig. 3, method 200 comprises a block 201 of performing an evolutionary algorithm by means of a controller. For example, in block 201, a configuration for the analog neural network hardware, e.g., the reconfigurable electronic circuit 12, e.g., discrete and integrated circuits, may be derived. The configuration is provided to the analog neural network hardware, and in block 202 of method 200, the analog neural network hardware is used for performing an inference on an input signal, e.g., training data. The result is provided to the controller, which evaluates the inference result and/or further metrics of the inference.

Thus, for example, block 202 may comprise performing step 120 and step 140 of method 100. In examples, block 201 may comprise performing step 180 of method 100.

In other words, for example, the method 200 treats the entire setup as two major parts: controller and hardware. The controller may be a circuitry or system capable of executing the basic operations required by the evolutionary algorithm and temporarily storing the intermediate results. For example, the controller may be implemented as either an application-specific integrated circuit (ASIC) or as an embedded system based on a microprocessor or field-programmable gate array (FPGA).

For example, two interacting modes are designed for the searching process: exploration and exploitation. In the exploration phase, the controller generates neural network architectures and sends them to the hardware, where a corresponding electronic neural network is then constructed on the hardware. In the exploration phase, the hardware receives the training data from the controller, performs the neural network inference, and sends the inference results back to the controller. The controller evaluates the current network architectures and may generate more potential architectures according to the evaluation results for the next exploration phase. For example, the entire neural architecture search process runs until the target prediction or classification accuracy is met.

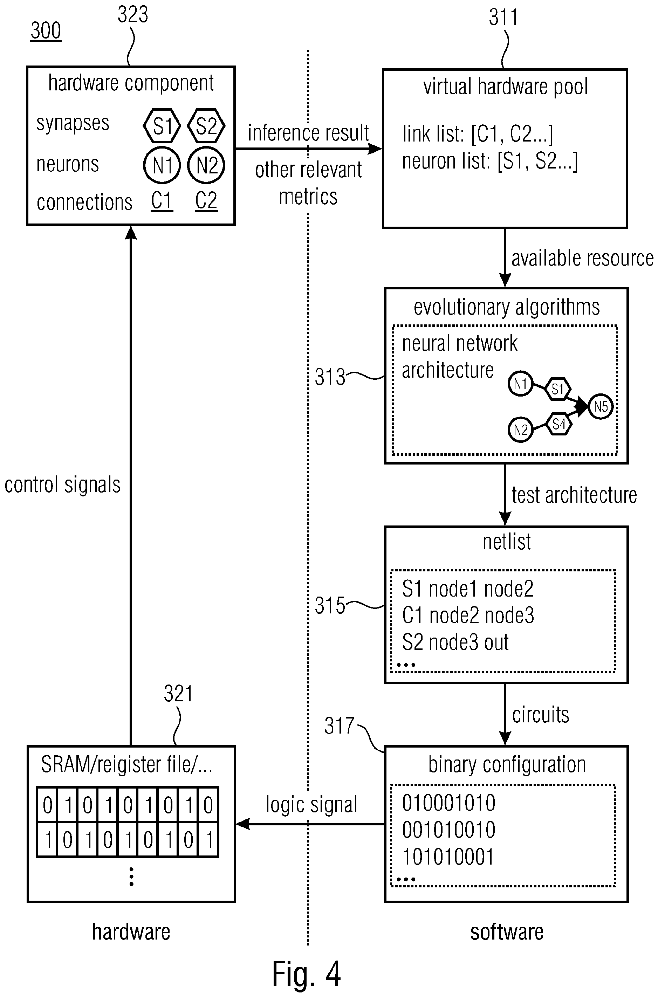

Fig. 4 illustrates a block diagram of a method 300 according to an embodiment. For example, method 300 may be an implementation of method 200 and/or method 100, wherein Fig. 4 illustrates an example for the interface between controller and analog neural network hardware, wherein blocks 311, 313, 315, and 317 on the software side indicated in Fig. 4 may be performed by the controller, and blocks 321, 323 and the hardware side indicted in Fig. 4 may be performed by the analog neural network hardware.

Starting from the hardware side, in block 321, control signals may be directly generated according to the configuration data stored in a memory, which may be part of the analog neural network hardware, e.g., part of the electronic circuit 10. The control signal may define the hardware connections between synapse and neuron components. The control signal may be provided to the reconfigurable electronic circuit 12. By performing the inference on the hardware in block 323, the inference results and optionally other relevant metrics, e.g., energy consumption, timing penalty, will be provided by the hardware to the controller.

For example, the hardware components are indexed and used to generate a virtual structure. The controller may evaluate the configuration, e.g., by determining a corresponding fitness score, e.g., using the received inference results and other metrics. According to the hardware utilization, which marked in the hardware pool, see block 311, and the fitness score, the evolutionary algorithm is performed in block 313. For example, the evolutionary algorithm may start from a previously evaluated configuration, e.g., the previously evaluated configuration or a selected one out of a set of previously evaluated configurations, making use of available resources. A new architecture or generation will be generated in the evolutional algorithm, and the architecture, which should be tested on the hardware, will firstly exported to a netlist, e.g., a description of the setting of connections of the reconfigurable electronic circuit 12, see block 315 and later converted to a binary representation, see block 317. This binary representation may be converted to a logic signal and passed to the hardware though particular communication protocol. The memory of hardware will be written by those logic signals and change the hardware structure by passing the control signals to the components.

Fig. 5A illustrates block diagram of a method 400 according to an embodiment. For example, method 400 may be an implementation of one or more of methods 100, 200, 300. Method 500 comprises a step 501 of generating a population with various architectures, in other words, a set of architectures for the neural network, e.g., a set of configurations for the reconfigurable electronic circuit 12. For example, step 12 may be performed based on the analog components available in the neural network hardware. The architectures are then evaluated one after the other by generating, in step 502, for a currently evaluated architecture, a netlist. In other words, a configuration signal is generated for configuring the neural network hardware, e.g., the reconfigurable neural network 12, which is sent to the hardware in step 520, thereby configuring the analog neural network hardware. In step 522, training data is sent to the neural network hardware, e.g., as an input signal. In step 540, an inference is performed on the training data by means of the analog neural network hardware. Note that block 510, comprising steps 520, 522, 540 are performed on the analog neural network hardware. In step 550 the inferences performed for the architectures of the set are evaluated regarding the inference performance, e.g., accuracy, and/or the hardware performance, such as energy and/or time consumption, and the architectures of the set may be ranked. If the best architecture meets a target, e.g., a predetermined criterion, it is used as a final architecture, otherwise the method continues with step 501, generating a new set of architectures, e.g., starting from the one or more best architectures of the previous set, e.g. the one or two or four best architectures of the previous set. In step 580, the best architecture is exported, e.g., stored in the analog neural network hardware.

Thus, in more general terms, further details described with respect to Fig. 5A being optional, method 100 comprises a step 501 of determining a set of configurations for the neural network. For example, the configurations of the set may be part of the plurality of configurations 22 described with respect to Fig. 1. For each of the set of configurations, the method may comprise a step 520 of configuring connections between the analog components of the reconfigurable electronic circuit according to the respective configuration to adapt an architecture of the neural network, a step 540 of processing an input signal using the neural network implemented by the respective configuration of the reconfigurable electronic circuit to obtain an inference result for the input signal, and a step 550 of evaluating the set of configurations based on the respective inference results. If none of the configurations of the set fulfills a predetermined criterion, method 100 may proceed with determining 501 a further set of configurations for the neural network based on the selected configuration.

According to an embodiment, the step of determining the further set of configurations, e.g., step 501, is performed by determining a modification with respect to one of the configurations of the set of configurations (e.g. a highest ranked configuration with respect to the predetermined criterion, based on which the configurations are evaluated) in terms of one or more of adding a neuron, deleting a neuron component, exchanging a neuron component, adding a synapse component, deleting a synapse component, exchanging a synapse component of the neural network.

According to an embodiment, the modification is performed starting from a merged configuration, which is obtained by merging two or more of the configurations of the set, e.g., as described below.

According to an embodiment, the step of determining the further set of configurations, e.g., step 501, is performed by merging two or more of the configurations of the set, e.g., the two or more highest ranked configurations with respect to the predetermined criterion, based on which the configurations are evaluated. For example, a merging of two or more configurations may be performed as described with respect to Fig. 7A and Fig. 7B, and may be referred to as crossover.

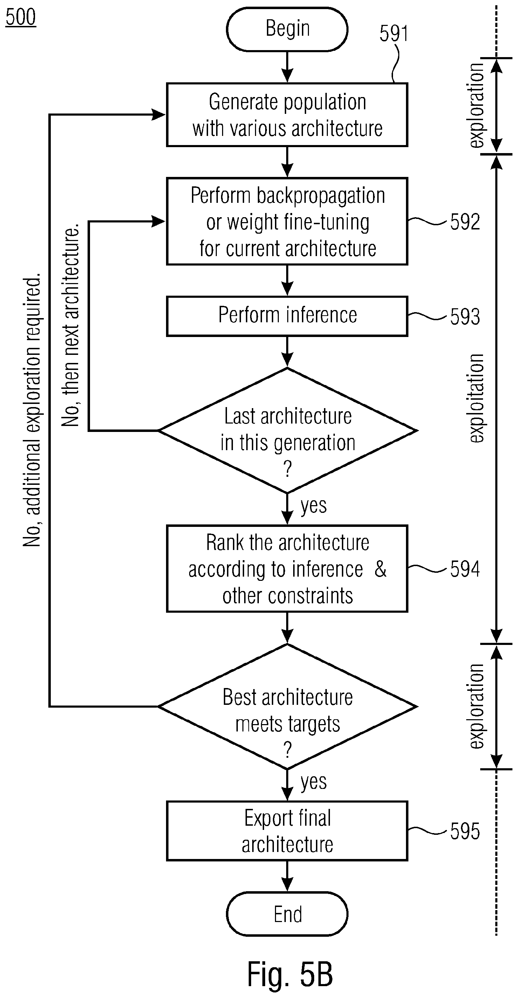

Fig. 5B illustrates a conventional software-based neural architecture search for comparative purpose: First, step 591, an initial population will be randomly generated, where a population commonly includes a set of the various neural architectures. Second, step 592, every architecture in this population will be trained using the back-propagation or the weights will be tuned so that an optimal train accuracy can be achieved. An inference will be performed in step 593 after the network is trained, and a fitness score, which combines the inference results and other customized constraints, will be calculated. After going though all architectures in this population, the architectures will be ranked in step 594 according to the individual fitness score. If the architecture with the highest score meets the requirement, the search process will be successfully terminated and the best architecture will be exported in step 595. Otherwise, the best few architectures (normally two to four) will be utilized to generate a new generation, which will used in the next exploration steps.

In contrast, in examples, embodiments of the present invention do not use backpropagation training or any other technique for fine-tuning the weights, as depicted in 5B. Additionally, rather than performing inference in software, the method 500 introduces extra steps to generate a hardware-compatible netlist, enabling direct inference execution on the hardware. For example, the output from the hardware will be directly used to calculate the fitness score. There is also the possibility of having a combined fitness score that considers other aspects of hardware performance, such as energy consumption and timing penalty, which can be directly extracted during inference execution on the hardware.

In the following, examples of determining the sets of architectures referred to in step 501 of Fig. 5, will be described.

According to an embodiment, generating a new set of architectures can be performed as follows: First, the best few architectures of a previous set will be combined (which may be referred to as crossover) as a new baseline structure. Second, numerous variants of this baseline structure will be created based on mutation operations, which can be classified into structural mutation and non-structural mutation. The structural mutation refers to direct change of the neural architecture by adding synapse, removing synapse, adding neurons, and removing neurons. Compared to the structural mutation, which can be performed by a direct operation on the index of the synapses and the index of the neurons without changing their value, the non-structural mutation performs a random changing in the weights and/or bias of the synapses and the neurons, respectively. For example, in the context of embodiments, a random change in the weights and bias of the synapses and the neurons may be realized by randomly exchanging a synapse element by another available synapse element or a neuron element by another available neuron element, respectively.

Fig. 6 illustrates the derivation of a neural network architecture by mutation according to an embodiment. In Fig. 6, an exemplary implementation of an analog neural network hardware, e.g., the reconfigurable electronic circuit 12 is depicted, the hardware including synapse elements, neuron elements and connections, e.g., as described with respect to Fig. 2. The analog neural network hardware has a limited number of synapse and neuron components. Moreover, in some embodiments, their randomness is constrained by the process variation. For instance, as commonly used electronic synapses, resistors have a nominal resistance w and a tolerance of 20%, which means a $\Delta w \in \aleph(0, 20\% \cdot w)$, resulting a random resistance in range from $0.8 \cdot w$ and $1.2 \cdot w$. This applies also to other key metrics such as the bias and the slope of the activation function. It is noted that implementation with other variance values are possible or with multiple sets of components, having different nominal values, as described above. Furthermore, it is noted that the description of Fig. 6 may also apply to embodiment, which have components having different nominal values by design choice. As shown in Fig. 6, the analog neural network hardware comprises flexible, e.g., switchable, connections to enable a flexible connection between synapses and neurons with a certain freedom.

As already mentioned, according to an embodiment, the components have identical nominal value for synapse and neurons. It means that their real value is unknown to the external and should exhibit a statistical distribution. In this case, the non-structural mutation could be converted to structural mutation by simply exchanging the components, which are currently in use, by the randomly selected free components from the hardware pool.

On the right-hand side of Fig. 6, various possible mutations for deriving a new architecture from a previous architecture are illustrated, including structural mutations and nun-structural mutations. Structural mutations include a mutation 601 of adding a link, a mutation 602 of removing a link, a mutation 603 of adding a neuron, and a mutation 604 of removing a neuron. Non-structural mutations include a mutation 605 of updating a weight, and a mutation 606 of updating a bias.

Fig. 7A and Fig. 7B illustrate schemes for resolving hardware conflicts in determining new architectures. Since the component selection is limited by the available hardware resource, a hardware conflict could be present and must be resolved using proper mechanisms. For the mutations, the components will be released or locked in the controller after removing and adding the corresponding components, so that the device will be not used twice during the exploration. Nevertheless, the crossover operation, i.e. combing two previous architectures, may still suffers from hardware conflicts. We propose two steps to work around with this limitation: First, only one mutation will be performed so that the difference between two variants of the new architecture is minimized. Second, the used component will be marked as "occupied" in the centralized list so that it's inherit probability at other places reduces to 0, as shown in Fig. 7A and Fig. 7B.

In the following, examples for embodiments of the synapse elements and the neuron elements are describes, as they may be implemented according to method 100 of Fig. 1 and in the electronic circuit according to Fig. 2 or in accordance with any of the further embodiments described herein.

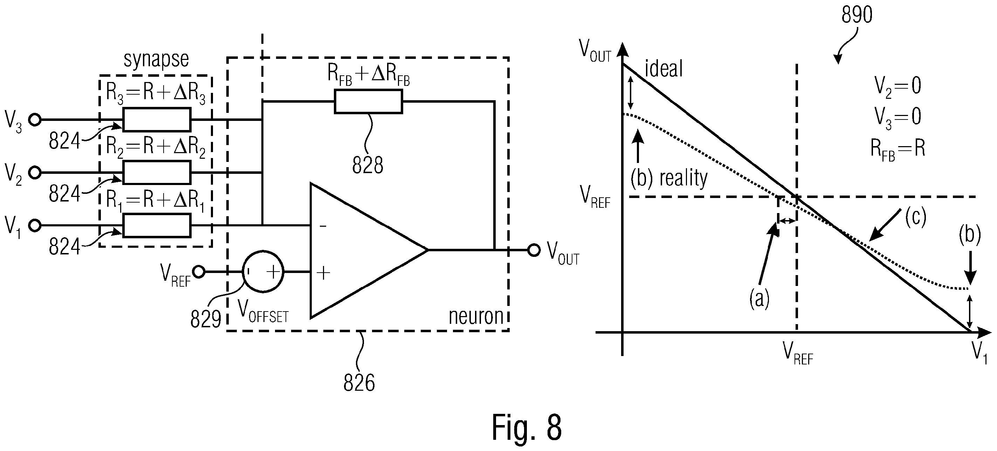

According to an embodiment, the neuron elements, e.g., the summing elements, are implemented as operational amplifiers, e.g., as inverted-summing amplifiers, e.g., as illustrated in Fig. 8 below.

Fig. 8 illustrates an example of a neuron component implemented as inverted-summing amplifier according to an embodiment. As illustrated in Fig. 8, a neuron of the neural network may be implemented as an inverted-summing amplifier 826, including a feedback resistor 828 and an offset voltage 829. In the illustrative example of Fig. 8, the amplifier 826 is connected, on its input-side, with three synapses 824, each being implemented by a resistor.

For example, the mathematical expression of an artificial neuron may be given by

$$Y_{OUT} = f((\textstyle\sum_{x=0}^{\infty} x_{in,x} \cdot w_x) + b),$$

where $x_{in,x}$, $w_x$ and $b$ represent input, weight of synapse and bias, respectively. Additionally, $f(x)$ is the non-linear activation function and $Y_{OUT}$ is the output of the neuron. This function could be realized in the hardware by using the circuits, as shown in Fig. 8. Without considering any process variation and hardware limitation, the output of the amplifier is given by:

$$V_{OUT} = \textstyle\sum_{x=0}^{\infty}(V_{REF} - V_x) \cdot \frac{R_{FB}}{R_x},$$

which performs an accumulate-multiply operation exactly as same as the artificial neurons. In reality, the amplifier often has a non-linearity and saturated maximal value so that it can be considered as a tanh-like activation function, as it is illustrated in the diagram 890 of Fig. 8. This allows rewriting the function to

$$V_{OUT} = f(\textstyle\sum_{x=0}^{\infty}(V_{REF} - V_x) \cdot \frac{R_{FB}}{R_x}),$$

so that the circuit has a complete function of the artificial neurons, where input resistor R1, R2, R3 are the weights and any others belong to neuron.

As previously mentioned, this circuit may suffer from the process variation in resistors $\Delta R_x$ and $\Delta R_{FB}$ as well as the offset $\Delta V_{OFFSET}$ of the amplifier, which adapt the slope and middle point of the amplifier's transfer function.

$$V_{OUT} = f\left( \sum_{x=0}^{\infty} (V_{REF} - V_x) \cdot \frac{R_{FB} + \Delta R_{FB}}{R_x + \Delta R_x} + \Delta V_{OFFSET} \right)$$

This variation will be reflected in changes in the weights and bias. In conventional methods, the variation will induce a computational error which leads to a reduced inference accuracy.

According to embodiments of the present invention it is possible to work around the hardware induced computational errors and even use them for keeping the diversity in the neural architecture searching process. For example, this can be done as follows: First, the resistors and the amplifier with feedback resistor are grouped to a synapse component pool and neuron component pool. Second, the evolutionary algorithm picks the component from two pools and connects them using configurable connection on the hardware. Then, the result will be calculated by applying the input voltage, which is converted by the training data or other input signals.

In the following, various implementations, in which the electronic component 10 with the analog neural network hardware 12 may be used, are described. In general, the method 100 for configuring the neural network, e.g., referred to as evolutionary algorithm, may be performed either on-chip or off-chip. In other words, a processing unit controlling the method, e.g. in a sense of providing the configurations, evaluating the inference results and, if required, determining further configuration results, may be either implemented as part of the electronic component in form of an integrated circuit, or may be implemented as a separate component, which may be connected to the electronic component 10 for configuring and configuring the neural network.

In other words, the described method could be used for a wide range of the customized applications, for example, in edge sensor systems, which necessitate minimal energy consumption and compact AI model to carry out tasks like early predication, classification and movement control. Analog neural network hardware performs computation in the analog domain, enabling a direct analog interface between sensors and the neural network.

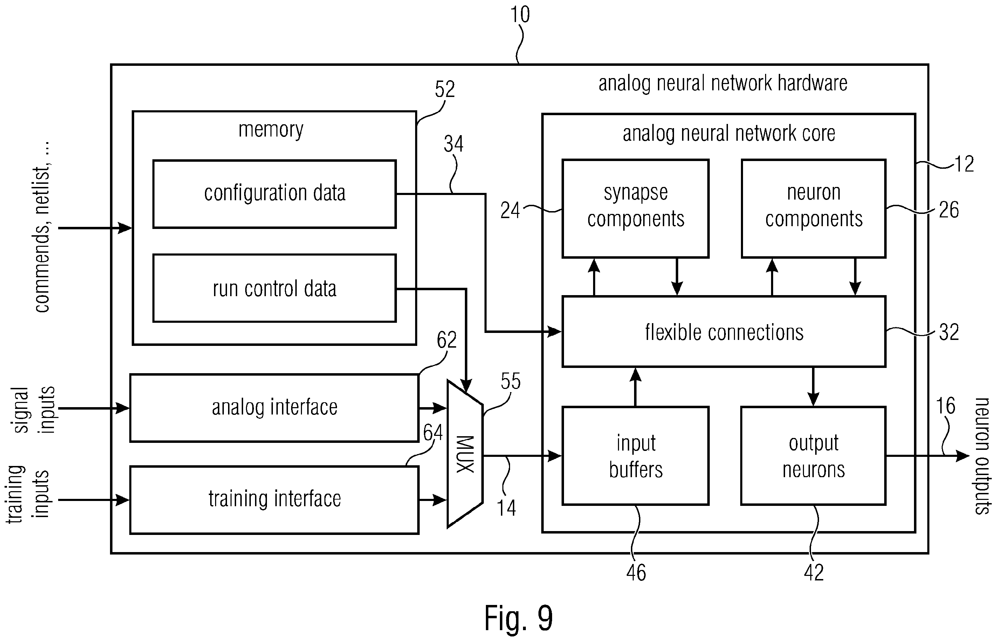

Fig. 9 illustrates a further embodiment of the electronic component 10, e.g. referred to as analog neural network hardware 90. Thus, any details described with respect to Fig. 9 may optionally be implemented in the electronic component 10 of Fig. 2 individually or in any combination.

As already mentioned with respect to Fig. 2, the reconfigurable electronic circuit 12 may comprise one or more output terminals, represented by input buffers 46 in Fig. 9, and/or one or more input interfaces, represented by output neurons 42 in Fig. 9.

According to an embodiment, the electronic component comprises a memory, e.g. memory 52. Memory 52 may store configuration data, based on which the configuration signal 34 may be provided. Optionally, the memory may store run control data for controlling a multiplexer 55 to switch between signal inputs for receiving signals during operation, e.g. sensor signals in case that the neural network is dedicated for evaluating sensor signals, and training inputs provided during the neural network search. Signal inputs and training inputs may be provided via respective interfaces 62, 64. For example, signal inputs may be provided via an analog interface 62, but in other examples, the electronic component may comprise a digital interface and a digital to analog converter. For example, input signal 14 provided to the reconfigurable electronic circuit is an analog signal.

In other words, for example, memory 52 may serve for saving the configuration of the network architectures and the instructions required to run the hardware. The memory 52 may enable and disable the flexible connections 32, which connect the input buffer 46, output neurons 42, synapse components 24 and neuron components 26 to build the neural architecture on the hardware.

For example, a dedicated amount of the input buffers and output neurons will be enabled according to the applications and will not be changed during exploration phase.

For example, the output signal 16 will be directly read out from the output neurons.

According to an embodiment, the electronic component 10 may support two modes: working mode and searching mode (in which the architecture of the neural network is configured). In the working mode, the analog neural network core is connected with signal sources such as sensors, data converter and any other input signal source, which is used for prediction and classification task. In the searching mode, the input is shorted with the controller that send the training input data to the hardware. The training input data will be directly propagated to the neural network. The switching between the two modes could be implemented using analog multiplexers.

Fig. 10 illustrates a further embodiment of the electronic component 10. According to this embodiment, the switchable connections are implemented as crossbar switches $32_1$, $32_2$, $32_3$. Inputs of the crossbar switch $32_1$ are connected to the input interfaces 46 and the outputs of the neuron elements 26 and outputs of the crossbar switch $32_1$ are connected to the synapse elements 24. Inputs of the crossbar switch $32_2$ are connected to the outputs of the synapse elements 24 and outputs of the crossbar switch $32_2$ are connected to the inputs of the neuron elements 26. Inputs of the crossbar switch $32_3$ are connected to the outputs of the neuron elements 26 and outputs of the crossbar switch $32_3$ are connected to the inputs of the output terminals 44. It is noted that the implementation and arrangement of switchable connections described with respect to Fig. 10 may be implemented independently of further features described with respect to Fig. 10.

For example, the analog input interface is responsible for receiving and buffering the analog signal from external sensor systems or the analog training data converted by the D/A converter.

According to an embodiment, the crossbar is utilized to establish physical connections between components. In examples, it is configured by the CPU via the global memory bus, and the configuration setup is stored in the local memory, which is located in close proximity to the crossbar.

According to an embodiment, the resistor bank may represent the synapse components used in the example. The resistors could be flexibly or switchable connected to the output of input buffer and the input and output of the amplifier-based neurons through crossbars.

According to an embodiment, the amplifier (-based Neuron) bank comprise neuron components utilized in the example. Similar to resistors, they can be flexibly connected through the crossbar.

According to an embodiment, the output buffer consists of several analog buffers or amplifier-based neurons. These components may deliver the analog result to the output with a specific driving capability.

As illustrated with respect to Fig. 10, according to an embodiment, the electronic component comprises a processing unit 70, e.g., a CPU. For example, processing unit 70 may be configured for controlling the neural network search process. For example, for each of a plurality of configurations of the reconfigurable electronic circuit for the neural network, processing unit 70 may provide a configuration signal to the reconfigurable electronic circuit to configure connections between the analog components of the reconfigurable electronic circuit according to the respective configuration to adapt an architecture of the neural network, and provide an input signal to the reconfigurable electronic circuit for evaluating the input signal using the neural network implemented by the respective configuration of the reconfigurable electronic circuit to obtain an inference result for the input signal.

For example, the processing unit 70 may be configured for deriving the configurations to be evaluated, evaluating the inference results, and selecting a final configuration. In other words, the processing unit 70 may perform the steps of block 201 described with respect to Fig. 2, or blocks 311, 313, 315, and 317 described with respect to Fig. 3. Optionally, the electronic component 10 may further comprise a global memory 72, and a digital interface 74 to receive a program or commands.

For example, the digital interface facilitates communication between the internal central processing unit (CPU) and an external controller. It enables the writing of programs and commands to the hardware, as well as the read of intermediate results from the hardware.

For example, the CPU can be implemented in two ways: as a complete processor, such as RISC-V, or as a specialized digital processing unit capable of executing the operations developed in this work.

In examples, global memory may be used to save the program and intermediate results.

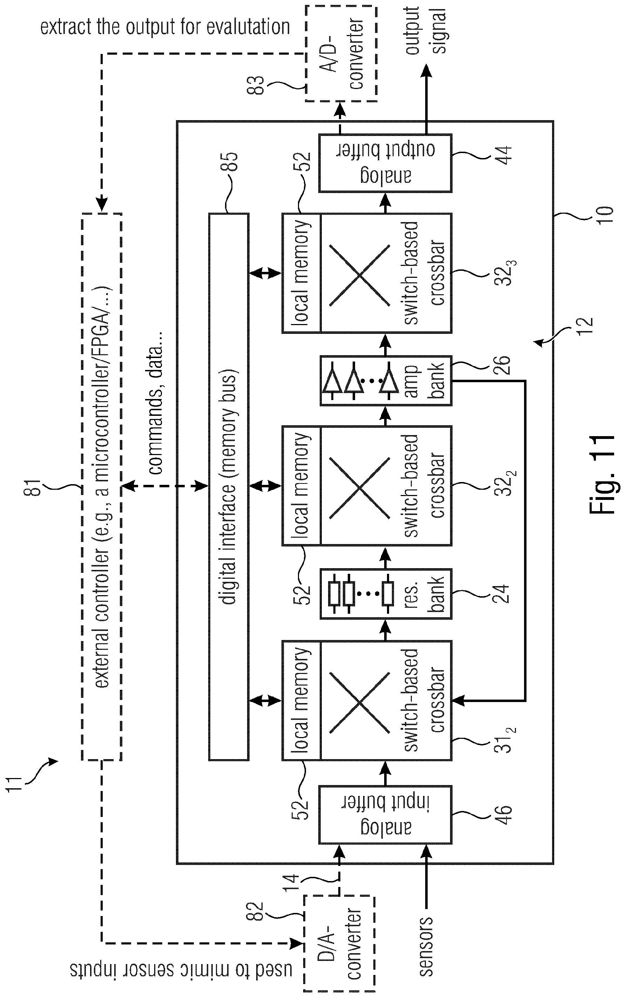

Fig. 11 illustrates an apparatus 11 for configuring a neural network according to an embodiment. The apparatus 11 comprises the electronic component 10 and further comprises a processing unit 81, e.g., a microcontroller or a FPGA. The processing unit 81 may be configured for performing the steps as described with respect to processing unit 70 of Fig. 10.

According to the embodiment of Fig. 10, the electronic component may comprise a digital interface 85 for communicating with the processing unit 81. In other words, processing unit 81 may serve as an external controller for the electronic component 10, e.g., for controlling the configuration/searching of the neural network, e.g., in contrast to the embodiment of Fig. 10, where processing unit 70 is part of the electronic component 10.

In other words, the control unit can be either integrated, e.g., processing unit 70 of Fig. 10, or embedded, e.g., processing unit 81 of Fig. 11. In the case of the embedded solution, the control unit can be implemented using an external controller (e.g., microcontroller, FPGA, etc.), as shown in Fig. 11. For example, on the chip, only the interface to local memories may be retained, enabling the configuration of the network to be written. The embedded solution may be especially suitable for companies specializing in sensor systems where there is no need for complex digital systems or where the design/cost of on-chip digital systems is affordable.

As illustrated in Fig. 11, apparatus 11 may comprise a digital-analog converter 82 for converting the input signal comprising the training data provided by processing unit 81 to an analog signal. Similarly, apparatus 11 may comprise an analog-digital converter 83 for converting the output signal comprising the inference result provided by the reconfigurable electronic circuit to a digital signal to be processed by the processing unit 70.

It is noted that the dashed blocks could be removed after finding a proper neural architecture using the proposed method.

Fig. 12 illustrates a further embodiment of apparatus 11. Compared to the embodiment of Fig. 11, apparatus 11 of Fig. 12 further comprises a multiplexer 55 and analog input interfaces 62 and 64 for receiving input signals during operation, e.g., sensor signals, and input signals carrying training data, e.g. as described with respect to Fig. 9. The apparatus 11 may optionally further comprise one or more sensors 38, e.g. for sensing one or more physical parameters. Apparatus 11 may be configured for evaluating one or more signals provided by the one or more sensors 38 using the reconfigurable electronic circuit 12. Optionally, the one or more sensors 38 may be part of an integrated circuit, which comprises the electronic component 10.

For example, as illustrated in Fig 12, local memory of the electronic component for storing the configuration of the switchable connections may optionally be implemented as one-time memory, e.g., eFuses. One-time memory may refer to a memory, which is irreversibly programmable to store an information in a non-volatile manner. E.g., after finding the final configuration for the reconfigurable electronic circuit 10, the configuration may be stored by means of an eFuse-type memory of the electronic component, so that the configuration will be available after disconnecting the electronic component from power.

In other words, apparatus 11 of Fig. 12 may be an example of a hardware implementation with integrated sensor and sensor analog frontend. The dashed blocks are disconnected after the architecture is found. If using the one-time memory (eFuse) is, the architecture is not able to be changed after the final chip test is finished.

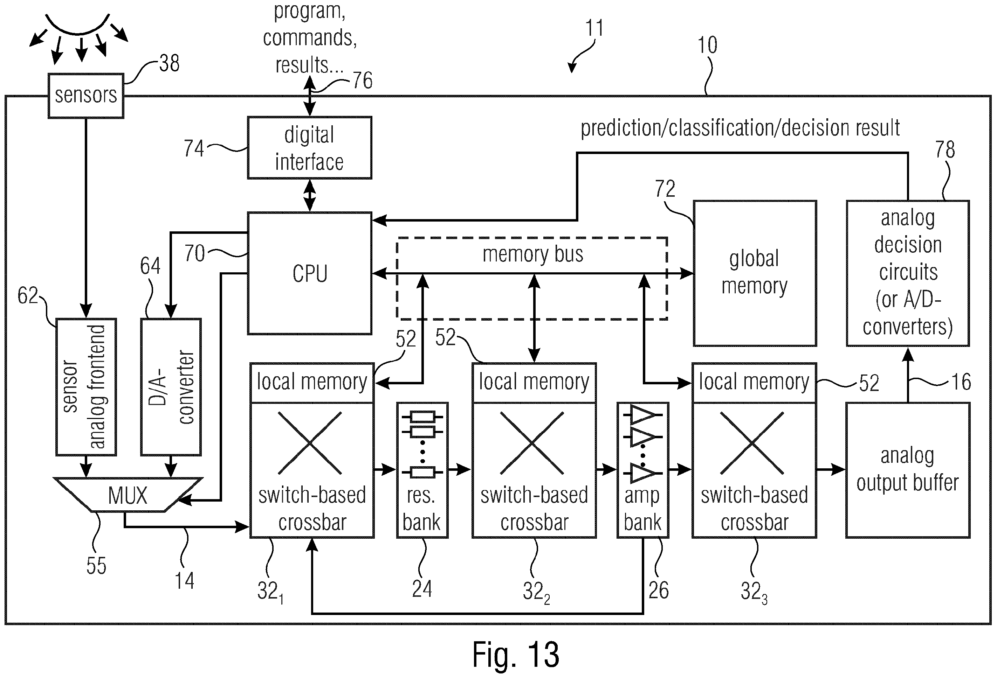

Fig. 13 illustrates a further embodiment of apparatus 11, representing a fully integrated implementation of apparatus 11. For example, all components may be integrated in one integrated circuit, e.g., an ASIC. Compared to the embodiment of Fig. 10, apparatus 11 of Fig. 13 further comprises a multiplexer 55 and analog input interfaces 62 and 64 for receiving input signals during operation, e.g., sensor signals, and input signals carrying training data, e.g. as described with respect to Fig. 9. As illustrated in Fig. 13, analog decision circuits or an analog to digital converter 78 may be used for providing a digital signal signaling the inference result to the processing unit 70. Apparatus 11 of Fig. 13 may comprise sensors 38, e.g., as described with respect to apparatus 11 of Fig. 12.

In other words, all components can be integrated onto a single ASIC. For this purpose, the integrated D/A converters generate training data from the CPU 70, while additional analog decision circuits or A/D converters are needed to convert the analog computing results into digital format. The digitalized results can be used for further architecture exploration or can be directly read through the digital interface. This implementation may be particularly interesting for sensor system vendors who want users or researchers to explore their own applications using the provided sensors.

Regarding the storage components for storing the configuration of the reconfigurable electronic circuit, depending on the intended usage of the hardware typical memory (such as SRAM, DRAM, or any non-volatile memory) or one-time programmable memory (like eFuse) may be used. For example, typical memory may allow the user to run the herein described method on the hardware to have customized the reconfigurable electronic circuit, and accordingly the neural network, for self-determined applications. To this end, for example, the implementations depicted in Fig. 10 (with integrated controller) and Fig. 11 (with an external controller) can be utilized. This solution is particularly appealing to researchers, engineers, and companies who wish to explore and validate their applications and designs. Using one-time programmable memory may be beneficial in combination with integrating, both the sensor and its corresponding analog frontend integrated into the system. The neural network configuration is done during the phase of the chip test. To enable it, the additional interface is required to access the input of the neural network, as shown in Fig. 12. The multiplexer (MUX) 55 is used to switch the training input from external controller and real sensor input. However, the neural network architecture cannot be changed after the programming in the final test phase because the one-time programmable memory can only be programmed once. This is especially interesting for the company providing the compact sensor solution within a single chip.

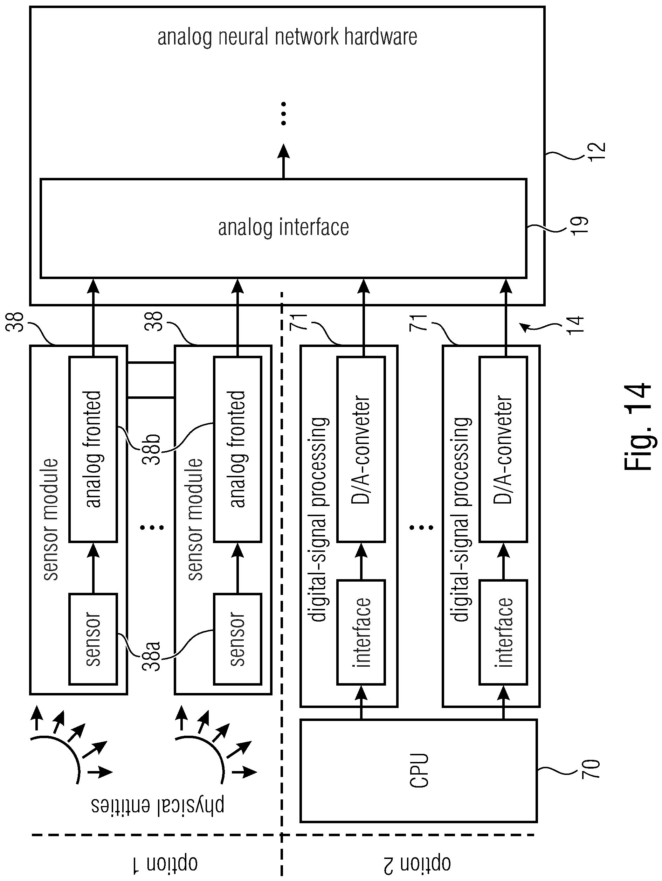

Fig. 14 illustrates embodiments for data interfaces to the analog neural network hardware, e.g., as provided by the reconfigurable electronic circuit 12. For example, the electronic component 10 or the reconfigurable electronic circuit 12 may comprise an analog interface to receive the input data 14.

According to an embodiment, e.g. as illustrated in option 1 in the upper panel of Fig. 14, the input data 14 may be provided by one or more sensor modules, which, according to this embodiment, comprise a sensor 38a for sensing one or more physical parameters and an analog frontend for providing the analog input signal 14. Thus, in examples, the input signal for searching the neural network may be provided by sensors.

According to an alternative embodiment, e.g. as illustrated in option 2 in the lower panel of Fig. 14, the input data 14 may be provided by a CPU 70 via digital-to-analog processing units 71, which may convert the digital signal provided by CPU 70 to provide the analog input signal 14. Thus, according to this embodiment, the input signal for seraching the neural network may be provided by a processing unit, e.g., based on a training data set.

In other words, in option 1, as illustrated in Fig. 14, the analog signal received by the sensor modules can be directly utilized as input for the analog neural network hardware. The decision is determined by the analog neural network hardware, which evaluates the analog input signals using the network obtained through the proposed method. However, utilizing direct sensor inputs to find an appropriate hardware structure using the proposed method can pose challenges. This is primarily due to the need to generate various combinations of sensor inputs in order to create a comprehensive training dataset. An alternative approach, depicted as Option 2 in Fig. 14, involves the utilization of a digital-analog converter (D/A converter). This converter can be positioned between the digital computing system 70 (e.g., microprocessor) and analog neural network hardware 12, enabling the generation of the dataset from the microprocessor. This approach facilitates also the conventional usage of the analog neural network hardware, treating it as a processing unit of a larger computing system.

Thus, in more general terms, method 100 may comprise providing the input signal 14 by providing input data using a microprocessor 70 and converting the input data from digital to analog to provide the input signal. Alternatively, method 100 may comprise providing the input signal by one or more sensing units for sensing a physical parameter.

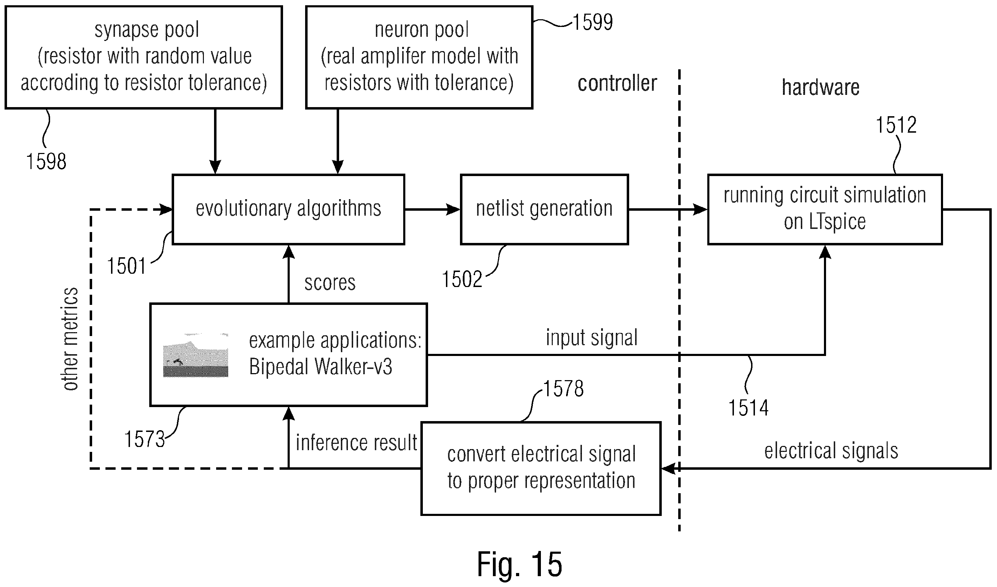

Fig. 15 illustrates a method for simulating an embodiment of the method 100. According to the method of Fig. 15, the analog neural network is simulated using a circuit simulation 1512, e.g., using an LTspice module. It is noted, however, that the method described with respect to Fig. 15 may be an embodiment of the present invention in that the circuit simulation is replaced by running the respective operations on the reconfigurable electronic circuit 12 comprising the components of the synapse pool 1598 and neuron pool 1599 described with respect to Fig. 15.

The verification setup, as shown in Fig. 15, is used to validate the effectiveness of the proposed method. A synapse pool 1598 and a neuron pool 1599 are generated according to the tolerance in the real hardware components. The core of the controller, the evolutionary algorithms 1501, samples the synapses and neurons from the hardware pool and construct new architectures and generations. The architecture to be test will be converted to the netlist, see block 1502, firstly and exported to the LTspice 1512, which is utilized to simulate the circuit behavior. Besides, the LTspice recevied also the input signal 1514 from the applications, where Bipedal Walker-3 simulation 1573 is utilized for the verification. The obtained electrical signals from the circuit simulation tool are converted to the proper data representation and sent to the application and algorithms. The application calculates the score achieved by the current architecture. Other hardware metrics such as energy consumption or timing penalty could be directly sent to the algorithm, which combines the score calculated by the application and the hardware metrics into a combined fitness score. According to the score achieved, the algorithms determined whether the evolution should be terminated with the best architecture or the next generation should be started with best few architectures from the current generation.

The "Bipedal Walker-v3", used for validating our proposed method, represents a typical control task. It comprises 24 inputs from various sensors, including 14 sensors for measuring angular speed and velocity at various locations, as well as additional 10 lidar sensors for distance measurement. Based on the sensor inputs, the neural network derived from our method will calculate the control signals. These signals will then be applied to control the motors responsible for the movement of the left and right knees and hips. This control mechanism enables the bipedal walker to move forward while maintaining balance and preventing falls.

Fig. 16 illustrates different generation of the neural network according to an exemplary simulation according to the method described with respect to Fig. 15, namely the initial architecture, a first evolution 1602, a third evolution, 1603 and the final architecture 1604. As depicted in Fig. 16, the verification is configured as follows: In this illustrative example, there are 500 neurons and 500 synapses, which means 500 inverted-summing amplifiers with feedback resistors and 500 resistors. They can be freely connected and reconnected. However, every component can only be used once. The target is that the walker can pass the test 10 times. The depth of the neural network and the maximal iteration are not limited. After starting the searching process, the searching process ends with 36th iterations and obtained a 7-layer neural networks, which can successfully pass the application test. A special observation is that the neural network doesn't necessarily follow the regular layer-wise structure and numerous feedforward paths could be found. Secondly, the used input neurons are reduced from 24 to 16, which means that not all inputs are really needed for this application. Third, since the hardware limitation, where a single inverted-summing amplifier always create a negative output and the resistance value is limited, the neural network could combine two neurons in series to obtain a positive output (e.g., neuron 262, 238 in 36th generation) and two neurons in parallel to contribute more influence on the output (e.g., neuron 120, 138 in 36th generation). In this case, the hardware process variation is maximally utilized to carry the information and construct a useful neural architecture.

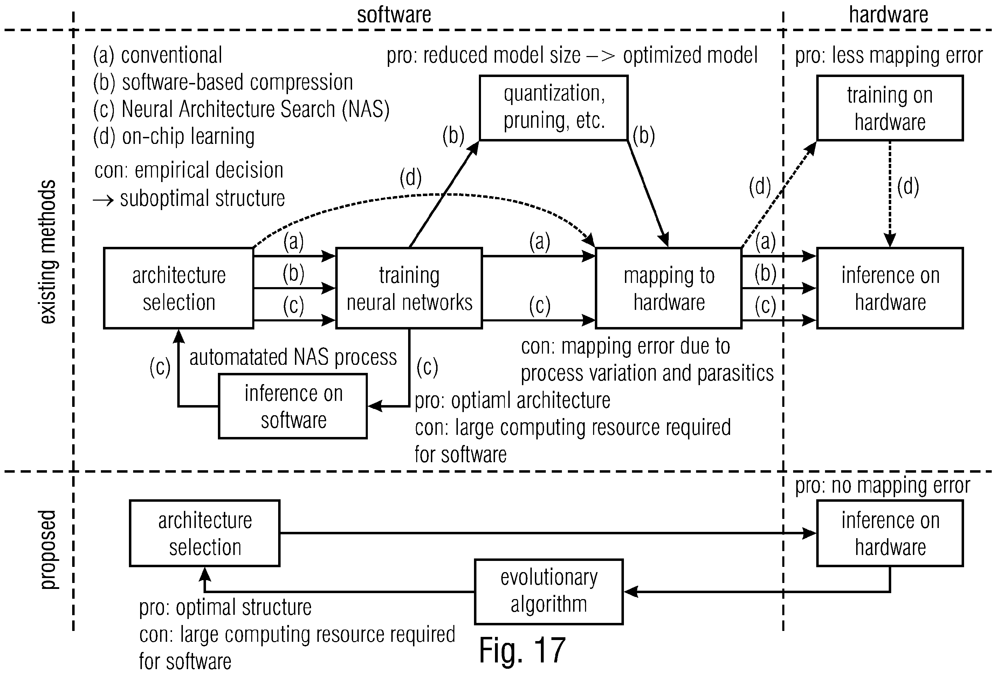

Fig. 17 illustrates a comparison between embodiments of the invention and conventional methods. As depicted in Fig. 17, in contrast to existing methods, the proposed method is able to optimize the neural architecture and reduce the computational error caused by the mapping simultaneously. The conventional method (a) often designs the neural architecture empirically, leading to a suboptimal and redundant neural architecture for hardware. After the model is trained, the neural network is directly mapped to the hardware. When the analog neural network hardware is performing the inference for those neural networks, a significant computational error will occur due to the process variation and parasitic. Using model compression (b), the suboptimal architecture could be optimized in their size and robustness according to the hardware. However, the mapping error caused by hardware nonidealities cannot be fully eliminated. Neural architecture search (c) automates the architecture decision process, which will no longer made based on the engineer experience. It is also possible to include hardware parameters into the NAS process. Nevertheless, the mapping error still exist. On-chip learning (d) partially solve the mapping error since the gradient calculation is performed on chip with including the hardware nonideality. It has two drawbacks: First, the architecture cannot be optimized. Second, the training precision is limited by the resolution of the data-converter, while the training still needs be partially performed in digital domain.

Embodiments of the present invention may solve those two problems as follows: First, the neural architecture search directly includes the hardware in the searching loop so that the hardware constraints is directly taken into account for the neural architecture search. Second, since the inference result, which is used for searching, is directly received from the hardware, no mapping error occurs. Third, the searching is not limited by the resolution of the hardware components because, according to embodiments, no backpropagation-based training is required or performed.

In the following, details, effects, and advantages of embodiments of the invention are described again in other words. All details described in the following may be combined with any of the embodiments described above, e.g., with method 100 of Fig. 1 and/or the electronic component 10 of Fig. 2.

To address the challenges mentioned in the beginning, embodiment of the invention provide a method that incorporates analog neural network hardware into the neural architecture search process. This method may combine the advantages of the neural architecture search for optimal architecture search and those of the on-chip learning in preventing computational errors arising from software-hardware mapping. However, the conventional neural architecture search necessitates a flexible structure to ensure sufficient adaptability in the connection between neuron and synapse circuits. In contrast, on-chip learning prefers a more static circuit structure, as the inconsistent structure in various hardware complicates the scheduling of layer-wise gradient computations. This contradictory situation makes the realization of the neural architecture search on hardware difficult. In 2019, a study on weight agnostic neural network (WANN) explores the feasibility of searching neural network architecture with a shared fixed weight across all connection (weights) for specific tasks. This aligns with the nature that living can perform fundamental activities such as eating, drinking, moving without prior knowledge, as their neural network inherently incorporate those knowledges autonomously, without the necessity for fine-tuning the synaptic strength such as weight and bias in artificial neural networks. Biological synapses and neurons exhibit similarities to electrical components in that their initial synaptic strengths, or the corresponding physical properties of these components, are statistically distributed.

Embodiments may rely on the finding that it may be feasible to design an electronic system that evolves in a manner analogous to biological neural networks, given that the environmental conditions are precisely controlled.

According to embodiments of the method described above, the neural network architecture is optimized for the dedicated hardware, where the controller, e.g., an external controller, may always looks for a structure with minimal connections to achieve the pre-defined target. This property allows hardware achieves the target with minimal energy consumption, which is especially important for edge sensor system with limited battery life. As there may be no mapping from the software to hardware, no accuracy loss will occur. What is derived from the searching process may be exactly what is provided as hardware output. In contrast, the exiting methods cannot well address those two problems simultaneously.

Currently, the model leakage becomes a critical safety issue in neural network hardware, while the attacker can generate misleading inputs after analyzing the model. By using this method, the neural network architecture is hardware customized. It means that every analog neural network hardware may have its own network architecture because the statistical distribution of the value of the electronic component. This property significantly reduces the risk by using the analog neural network hardware. Even if the model leak happened at one hardware, it will not risk the usage of other hardware.

For example, the proposed method may be used for configuring analog neural network hardware, which can be used in the sensor systems at edge for an early classification or prediction. Those sensor systems could be used everywhere, where a sensor system is required.

The analog neural network hardware is not limited to the basic artificial neural networks, which consists of only fully-connected layers. The hardware, which may be implemented with a dedicated topology that could be a mixture of various types of the layer (e.g., fully-connected layer, convolutional layer, re-current layer, etc.), could also use the proposed method. For example, the analog neural network hardware is not limited only to the hardware for executing the mathematical modeling of biological neuron models. It may includes also analog spiking neural networks hardware, where they mimic the biological electrical behavior using the analog electronics components. The proposed method can be also applied to this type of hardware.

Although some aspects have been described as features in the context of an apparatus it is clear that such a description may also be regarded as a description of corresponding features of a method. Although some aspects have been described as features in the context of a method, it is clear that such a description may also be regarded as a description of corresponding features concerning the functionality of an apparatus.

Some or all of the method steps may be executed by (or using) a hardware apparatus, like for example, a microprocessor, a programmable computer or an electronic circuit. In some embodiments, one or more of the most important method steps may be executed by such an apparatus.

In the foregoing Detailed Description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus the following claims are hereby incorporated into the Detailed Description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

The above described embodiments are merely illustrative for the principles of the present disclosure. It is understood that modifications and variations of the arrangements and the details described herein will be apparent to others skilled in the art. It is the intent, therefore, to be limited only by the scope of the pending patent claims and not by the specific details presented by way of description and explanation of the embodiments herein.

References

| | |
|---|---|
| [Fiesler et al., 1990] | Emile Fiesler, Amar Choudry, and H. John Caulfield "Weight discretization paradigm for optical neural networks", Proc. SPIE 1281, Optical Interconnections and Networks, (1 August 1990); https://doi.org/10.1117/12.20700 |
| [Balzer et al., 1991] | Wolfgang Balzer, Masanobu Takahashi, Jun Ohta, Kazuo Kyuma, "Weight quantization in Boltzmann machines", Neural Network, Vol. 4, Issue 3, 1993, pp. 405 - 409, https://doi.org/10.1016/0893-6080(91)90077-I. |
| [Rastegari et al., 2016] | Rastegari, M., Ordonez, V., Redmon, J., Farhadi, A, "XNOR-Net: ImageNet Classification Using Binary Convolutional Neural Networks". In: Leibe, B., Matas, J., Sebe, N., Welling, M. (eds) Computer Vision - ECCV 2016. ECCV 2016. Lecture Notes in Computer Science, vol 9908. Springer, Cham. https://doi.org/10.1007/978-3-319-46493-0_32 |
| [Zhang et al., 2020]. | L. Zhang, D. Borggreve, F. Vanselow and R. Brederlow, "Quantization Considerations of Dense Layers in Convolutional Neural Networks for Resistive Crossbar Implementation," 2020 9th International Conference on Modern Circuits and Systems Technologies (MOCAST), Bremen, Germany, 2020, pp. 1-6, doi: 10.1109/MOCAST49295.2020.9200280. |

(continued)

| [Klachko et al., 2019] | M. Klachko, M. R. Mahmoodi and D. Strukov, "Improving Noise Tolerance of Mixed-Signal Neural Networks," 2019 International Joint Conference on Neural Networks (IJCNN), Budapest, Hungary, 2019, pp. 1-8, doi: 10.1109/IJCNN.2019.8851966. |
| [Han et al., 2015]. | Han, S., Pool, J., Tran, J., & Dally, W. (2015). Learning both weights and connections for efficient neural network. Advances in neural information processing systems, 28. |
| [Isik et al., 2020] | Isik, B., Choi, K., Zheng, X., Wong, H. S. P., Ermon, S., Weissman, T., & Alaghi, A. (2020, October). Noisy neural network compression for analog storage devices. In NeurIPS 2020 Workshop: Deep Learning through Information Geometry. |
| [Xue, et al., 2013] | J. Xue, J. Li and Y. Gong, "Restructuring of Deep Neural Network Acousiic Models with Singular Value Decomposition. Interspeech 2023. |
| [Bucilua, et al., 2006] | Cristian Bucilua, Rich Caruana, and Alexandru Niculescu-Mizil. Model compression. In Proceedings of the 12th ACM SIGKDD international conference on Knowledge discovery and data mining, pages 535-541. ACM, 2006. |
| [Bergstra, et al., 2011] | James Bergstra, Remi Bardenet, Yoshua Bengio, and Balazs Kegl. Algorithms for hyper-parameter ' optimization. In NIPS, 2011. |
| [Zoph, et al., 2016] | Barret Zoph, and V. Le Quoc. "Neural architecture search with reinforcement learning." arXiv preprint arXiv:1611.01578 (2016). |
| [Kandasamy, et al., 2018] | K. Kandasamy, W. Neiswanger, J. Schneider, B. Poczos,and E. P. Xing. Neural architecture search with bayesian optimisation and optimal transport. Advances in neural information processing systems, 31, 2018. |
| [Stanley, et al., 2002] | K. O. Stanley and R. Miikkulainen, "Efficient evolution of neural network topologies," Proceedings of the 2002 Congress on Evolutionary Computation. CEC'02 (Cat. No.02TH8600), Honolulu, HI, USA, 2002, pp. 1757-1762 vol.2, doi: 10.1109/CEC.2002.1004508. |
| [Jiang, et al., 2020] | W. Jiang et al., "Hardware/Software Co-Exploration of Neural Architectures," in IEEE Transactions on Computer-Aided Design of Integrated Circuits and Systems, vol. 39, no. 12, pp. 4805-4815, Dec. 2020, doi: 10.1109/TCAD.2020.2986127. |
| [Gaier, et al., 2019] | Adam Gaier and David Ha, "Weight agnostic neural networks", Proceedings of the 33rd International Conference on Neural Information Processing Systems. Curran Associates Inc., Red Hook, NY, USA, Article 482, 5364-5378. |
| [Krestinskaya, et al., 2019] | O. Krestinskaya, K. N. Salama and A. P. James, "Learning in Memristive Neural Network Architectures Using Analog |
| | Backpropagation Circuits," in IEEE Transactions on Circuits and Systems I: Regular Papers, vol. 66, no. 2, pp. 719-732, Feb. 2019, doi: 10.1109/TCSI.2018.2866510. |
| [Zhang, et al., 2023] | L. Zhang, P. Xu, D. Borggreve, F. Vanselow and R. Brederlow, "A FeFET In-Memory-Computing Core with Offset Cancellation for Mitigating Computational Errors," ESSCIRC 2023- IEEE 49th European Solid State Circuits Conference (ESSCIRC), Lisbon, Portugal, 2023, pp. 29-32, doi: 10.1109/ESSCI RC59616.2023.10268782. |

## Claims

**1.** Method (10) for configuring a neural network, the neural network being implemented by a plurality of analog components of a reconfigurable electronic circuit (12), the method comprising:
for each of a plurality of configurations (22) of the reconfigurable electronic circuit for the neural network,

configuring (120) connections between the analog components of the reconfigurable electronic circuit according to the respective configuration to adapt an architecture of the neural network,
evaluating (140) an input signal (14) using the neural network implemented by the respective configuration of the reconfigurable electronic circuit to obtain an inference result for the input signal.

**2.** Method according to claim 1, further comprising:
evaluating (180) the plurality of configurations based on the respective inference results to select one of the configurations.

**3.** Method according to any of the preceding claims, further comprising, for each of the plurality of configurations, providing (520) a configuration signal (34) to the reconfigurable electronic circuit to configure the reconfigurable electronic circuit according to the respective configuration.

4. Method according to any of the preceding claims, wherein configuring (120) the connections between the analog components of the reconfigurable electronic circuit comprises setting switchable connections between a plurality of neuron components and a plurality of synapse components of the reconfigurable electronic circuit, thereby selecting a set out of the plurality of neuron components as neurons for the neural network and a set out of the plurality of synapse components as synapses for the neural network.

5. Method according to any of the preceding claims, further comprising:

   determining (501) a set of configurations for the neural network,
   for each of the set of configurations,

   configuring (520) connections between the analog components of the reconfigurable electronic circuit according to the respective configuration to adapt an architecture of the neural network,
   processing (540) an input signal using the neural network implemented by the respective configuration of the reconfigurable electronic circuit to obtain an inference result for the input signal,

   evaluating (550) the set of configurations based on the respective inference results,
   if none of the configurations of the set fulfills a predetermined criterion, determining (501) a further set of configurations for the neural network based on the selected configuration.

6. Method according to claim 5, wherein determining the further set of configurations comprises determining a modification with respect to one of the configurations of the set of configurations in terms of one or more of adding a neuron, deleting a neuron component, exchanging a neuron component, adding a synapse component, deleting a synapse component, exchanging a synapse component of the neural network.

7. Method according to any of the preceding claims, comprising:
   storing a final configuration for the neural network in a storage component (52).

8. Electronic component (10) for implementing an analog neural network, the electronic component comprising a reconfigurable electronic circuit (12) comprising:

   a plurality (24) of resistive elements ($S_1$, $S_2$, $S_3$),
   a plurality (26) of summing elements ($N_1$, $N_2$, $N_3$), and
   a plurality of switchable connections (32, $32_1$, $32_2$, $32_3$), each of the switchable connections being switchable to establish a connection between one of the resistive elements and one of the summing elements.

9. Electronic component according to claim 8, comprising a first crossbar switch ($32_1$) for providing switchable connections between each one of respective outputs of the plurality of resistive elements and each one of respective inputs of the summing elements, and/or
   a second crossbar switch ($32_2$) for providing switchable connections between each one of respective outputs of the plurality of summing elements and each one of respective inputs of the resistive elements.

10. Electronic component according to any of claims 8 or 9, comprising one or more storage components (52) for storing a configuration of the switchable connections.

11. Electronic component according to any of claims 8 to 10,

   wherein the plurality of resistive elements are nominally equal, and/or
   wherein the plurality of summing elements are nominally equal.

12. Electronic component according to any of claims 8 to 11,

   wherein a variance of a resistance value of the plurality of resistive elements is in a range between 5 % and 50 %, or between 5 % and 30 %, and/or
   wherein the summing elements are implemented as operational amplifiers, and

wherein a variance of an offset voltage of the operational amplifier is in a range between 5mV and 100mV, and/or

wherein a variance of a resistance value of feedback resistors of the operational amplifiers is in a range between 5 % and 50 %, or between 5 % and 30 %.

13. Electronic component according to any of the preceding claims, being implemented as integrated circuit and further comprising an input interface (85), wherein the electronic component is configured for receiving a configuration signal (34) via the input interface and configuring the switchable connections according to the configuration signal.

14. Apparatus (11) for configuring a neural network, the apparatus comprising:

the electronic component (10) according to any of claims 8 to 13, and
a processing unit (70) configured for
for each of a plurality of configurations of the reconfigurable electronic circuit for the neural network,

providing a configuration signal (34) to the reconfigurable electronic circuit to configure the plurality of switchable connections of the reconfigurable electronic circuit according to the respective configuration to adapt an architecture of the neural network, and
providing an input signal (14) to the reconfigurable electronic circuit for evaluating the input signal using the neural network implemented by the respective configuration of the reconfigurable electronic circuit to obtain an inference result for the input signal.

15. Apparatus according to claim 14, implemented as an integrated electronic circuit.

100

Configuring connections — 120

Evaluating an input signal — 140

Evaluate the configurations — 180

Fig. 1

Fig. 2

exploration

201

controller with
evolutionary algorithms

202

analog neural network hardware

exploitation

200

# Fig. 3

**300** 323

hardware component

synapses ⬡S1 ⬡S2

neurons Ⓝ1 Ⓝ2

connections C1 C2

→ inference result

other relevant metrics

311

virtual hardware pool

link list: [C1, C2...]
neuron list: [S1, S2...]

available resource

evolutionary algorithms

313

neural network architecture

Ⓝ1 —⬡S1→ Ⓝ5
Ⓝ2 —⬡S4→

test architecture

netlist

315

S1 node1 node2
C1 node2 node3
S2 node3 out
...

circuits

control signals

321

SRAM/reigister file/...

| 0 | 1 | 0 | 1 | 0 | 1 | 0 | 1 | 0 |
| 1 | 0 | 1 | 0 | 1 | 0 | 1 | 0 | 1 |

⋮

logic signal

317

binary configuration

010001010
001010010
101010001
...

hardware

software

Fig. 4

Fig. 5A

500

Begin ⟩ 591

↓

Generate population
with various architecture

↓

Perform backpropagation
or weight fine-tuning
for current architecture ⟩ 592

↓

Perform inference ⟩ 593

↓

Last architecture
in this generation
?

↓ yes

Rank the architecture
according to inference &
other constraints ⟩ 594

↓

Best architecture
meets targets
?

↓ yes

Export final
architecture ⟩ 595

↓

End

No, additional exploration required.

No, then next architecture.

exploration

exploitation

exploration

Fig. 5B

Fig. 6

EP 4 685 701 A1

hardware conflict in the synapse components

Fig. 7A

hardware conflict in the neuron components

Fig. 7B

Fig. 8

EP 4 685 701 A1

Fig. 9

Fig. 10

EP 4 685 701 A1

Fig. 11

Fig. 12

Fig. 13

EP 4 685 701 A1

Fig. 14

Fig. 15

Fig. 16 (Part 1)

Fig. 16 (Part 2)

Fig. 17

**software**

pro: reduced model size —> optimized model

(a) conventional
(b) software-based compression
(c) Neural Architecture Search (NAS)
(d) on-chip learning

con: empirical decision
—> suboptimal structure

quantization, pruning, etc.

training neural networks

architecture selection

inference on software

automated NAS process

con: mapping error due to process variation and parasitics
pro: optiaml architecture
con: large computing resource required for software

mapping to hardware

**hardware**

pro: less mapping error

training on hardware

inference on hardware

**existing methods**

**proposed**

pro: no mapping error

inference on hardware

evolutionary algorithm

architecture selection

pro: optimal structure
con: large computing resource required for software

Europäisches
Patentamt

European
Patent Office

Office européen
des brevets

**EUROPEAN SEARCH REPORT**

**Application Number**

EP 24 19 0699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WAN QIYU ET AL: "NAS-SE: Designing A Highly-Efficient In-Situ Neural Architecture Search Engine for Large-Scale Deployment", PROCEEDINGS OF THE 29TH ACM SYMPOSIUM ON VIRTUAL REALITY SOFTWARE AND TECHNOLOGY, ACMPUB27, NEW YORK, NY, USA, 28 October 2023 (2023-10-28), pages 756-768, XP059474767, DOI: 10.1145/3613424.3614265 ISBN: 979-8-4007-0330-0 * figures 1, 11, 12 * * sections 2 and 6 * ----- | 1-7 | INV. G06N3/065 G06N3/082 G06N3/086  ADD. G06N3/048 |
| A | ZHANG XINYI ET AL: "When Neural Architecture Search Meets Hardware Implementation: from Hardware Awareness to Co-Design", 2019 IEEE COMPUTER SOCIETY ANNUAL SYMPOSIUM ON VLSI (ISVLSI), IEEE, 15 July 2019 (2019-07-15), pages 25-30, XP033617582, DOI: 10.1109/ISVLSI.2019.00014 [retrieved on 2019-09-13] * section 3 * ----- | 5 | |
| | -/-- | | TECHNICAL FIELDS SEARCHED (IPC)  G06N |

The present search report has been drawn up for all claims

| Place of search | Date of completion of the search | Examiner |
|---|---|---|
| The Hague | 26 March 2025 | Theissing, Simon |

EPO FORM 1503 03.82 (P04C01)

Europäisches
Patentamt

European
Patent Office

Office européen
des brevets

**EUROPEAN SEARCH REPORT**

Application Number

EP 24 19 0699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KRESTINSKAYA O ET AL: "Towards Hardware Optimal Neural Network Selection with Multi-Objective Genetic Search", 2019 IEEE INTERNATIONAL SYMPOSIUM ON CIRCUITS AND SYSTEMS (ISCAS), IEEE, 12 October 2020 (2020-10-12), pages 1-5, XP033933369, ISSN: 2158-1525, DOI: 10.1109/ISCAS45731.2020.9180514 ISBN: 978-1-7281-3320-1 [retrieved on 2020-08-28] * figure 1 * * section II * ----- | 8,10-15 | |
| X | JOHANNES SCHEMMEL ET AL: "Wafer-scale integration of analog neural networks", NEURAL NETWORKS, 2008. IJCNN 2008. (IEEE WORLD CONGRESS ON COMPUTATIONAL INTELLIGENCE). IEEE INTERNATIONAL JOINT CONFERENCE ON, IEEE, PISCATAWAY, NJ, USA, 1 June 2008 (2008-06-01), pages 431-438, XP031327564, ISBN: 978-1-4244-1820-6 * figures 3-5 * * page 433 - page 434 * ----- | 8,9 | TECHNICAL FIELDS SEARCHED (IPC) |

-/--

The present search report has been drawn up for all claims

| Place of search | Date of completion of the search | Examiner |
|---|---|---|
| The Hague | 26 March 2025 | Theissing, Simon |

EPO FORM 1503 03.82 (P04C01)

Europäisches Patentamt

European Patent Office

Office européen des brevets

**EUROPEAN SEARCH REPORT**

Application Number

EP 24 19 0699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SATYANARAYANA SRINAGESH ET AL: "A Reconfigurable Analog VLSI Neural Network Chip", ADVANCES IN NEURAL INFORMATION PROCESSING SYSTEMS, 1 January 1989 (1989-01-01), pages 758-768, XP093263225, Retrieved from the Internet: URL:https://papers.neurips.cc/paper_files/paper/1989/file/539fd53b59e3bb12d203f45a912eeaf2-Paper.pdf [retrieved on 2025-03-25] * figure 10 * * section "Circuit Description of the Distributed-Neuron Synapse" on pages 762-763 * | 10,14 | |
| | ----- | | |
| | | | TECHNICAL FIELDS SEARCHED (IPC) |

The present search report has been drawn up for all claims

| Place of search | Date of completion of the search | Examiner |
|---|---|---|
| The Hague | 26 March 2025 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

Europäisches
Patentamt

European
Patent Office

Office européen
des brevets

**Application Number**

EP 24 19 0699

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
## SHEET B

Application Number

EP 24 19 0699

The Search Division considers that the present European patent application does not comply with the requirements of unity of invention and relates to several inventions or groups of inventions, namely:

```
1. claims: 1-7

   Neural network architecture search using a reconfigurable
   electronic circuit
                        ---

2. claims: 8-15

   Electronic component for implementing an analog neural
   network
                        ---
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EMILE FIESLER** ; **AMAR CHOUDRY** ; **H. JOHN CAULFIELD**. Weight discretization paradigm for optical neural networks. *Proc. SPIE 1281, Optical Interconnections and Networks*, 01 August 1990, https://doi.org/10.1117/12.20700
- **WOLFGANG BALZER** ; **MASANOBU TAKAHASHI** ; **JUN OHTA** ; **KAZUO KYUMA**. Weight quantization in Boltzmann machines. *Neural Network*, 1993, vol. 4 (3), 405-409, https://doi.org/10.1016/0893-6080(91) 90077-I
- XNOR-Net: ImageNet Classification Using Binary Convolutional Neural Networks. **RASTEGARI, M.** ; **ORDONEZ, V** ; **REDMON, J.** ; **FARHADI, A**. Computer Vision - ECCV 2016. ECCV 2016. Lecture Notes in Computer Science. Springer, vol. 9908
- **L. ZHANG** ; **D. BORGGREVE** ; **F. VANSELOW** ; **R. BREDERLOW**. Quantization Considerations of Dense Layers in Convolutional Neural Networks for Resistive Crossbar Implementation. *2020 9th International Conference on Modern Circuits and Systems Technologies (MOCAST), Bremen, Germany*, 2020, 1-6
- **M. KLACHKO** ; **M. R. MAHMOODI** ; **D. STRUKOV**. Improving Noise Tolerance of Mixed-Signal Neural Networks. *2019 International Joint Conference on Neural Networks (IJCNN), Budapest, Hungary*, 2019, 1-8
- **HAN, S.** ; **POOL, J.** ; **TRAN, J.** ; **DALLY, W.** Learning both weights and connections for efficient neural network. *Advances in neural information processing systems*, 2015, vol. 28
- **ISIK, B.** ; **CHOI, K.** ; **ZHENG, X.** ; **WONG, H. S. P** ; **ERMON, S** ; **WEISSMAN, T** ; **ALAGHI, A**. Noisy neural network compression for analog storage devices. *NeurIPS 2020 Workshop: Deep Learning through Information Geometry*, October 2020
- **J. XUE** ; **J. LI** ; **Y. GONG**. Restructuring of Deep Neural Network Acousiic Models with Singular Value Decomposition. *Interspeech*, 2023

- Model compression. **CRISTIAN BUCILUA** ; **RICH CARUANA** ; **ALEXANDRU NICULESCU-MIZIL**. Proceedings of the 12th ACM SIGKDD international conference on Knowledge discovery and data mining. ACM, 2006, 535-541
- **JAMES BERGSTRA** ; **REMI BARDENET** ; **YOSHUA BENGIO** ; **BALAZS KEGL**. Algorithms for hyper-parameter ' optimization. *NIPS*, 2011
- **BARRET ZOPH** ; **V. LE QUOC**. Neural architecture search with reinforcement learning. *arXiv preprint arXiv:1611.01578*, 2016
- **K. KANDASAMY** ; **W. NEISWANGER** ; **J. SCHNEIDER** ; **B. POCZOS** ; **E. P. XING**. Neural architecture search with bayesian optimisation and optimal transport. *Advances in neural information processing systems*, 2018, vol. 31
- **K. O. STANLEY** ; **R. MIIKKULAINEN**. Efficient evolution of neural network topologies. *Proceedings of the 2002 Congress on Evolutionary Computation. CEC'02 (Cat. No.02TH8600), Honolulu, HI, USA*, 2002, vol. 2, 1757-1762
- **W. JIANG et al.** Hardware/Software Co-Exploration of Neural Architectures. *IEEE Transactions on Computer-Aided Design of Integrated Circuits and Systems*, December 2020, vol. 39 (12), 4805-4815
- Weight agnostic neural networks. **ADAM GAIER** ; **DAVID HA**. Proceedings of the 33rd International Conference on Neural Information Processing Systems. Curran Associates Inc., 5364-5378
- **O. KRESTINSKAYA, K. N. SALAMA, A. P. JAMES**. Learning in Memristive Neural Network Architectures Using Analog Backpropagation Circuits. *IEEE Transactions on Circuits and Systems I*, February 2019, vol. 66 (2), 719-732
- **L. ZHANG** ; **P. XU** ; **D. BORGGREVE** ; **F. VANSELOW** ; **R. BREDERLOW**. A FeFET In-Memory-Computing Core with Offset Cancellation for Mitigating Computational Errors. *ESSCIRC 2023- IEEE 49th European Solid State Circuits Conference (ESSCIRC)*, 2023, 29-32